# EUROPEAN PATENT APPLICATION

(11) **EP 4 708 033 A1**
(43) Date of publication of application: **11.03.2026**
(21) Application number: 24835309.6
(22) Date of filing: 29.06.2024
(51) Int. Cl.: G06F 8/65

(54) **STATIC LINKING METHOD AND RELATED APPARATUS**

(30) Priority: 06.07.2023 CN 202310829978
(71) Applicant: Huawei Technologies Co., Ltd., Shenzhen, Guangdong 518129 (CN)
(72) Inventor: WANG, Zhen, Shenzhen, Guangdong 518129 (CN); YIN, Yonghong, Shenzhen, Guangdong 518129 (CN); LI, Yalei, Shenzhen, Guangdong 518129 (CN); YANG, Cheng, Shenzhen, Guangdong 518129 (CN); DING, Lei, Shenzhen, Guangdong 518129 (CN)
(74) Representative: Gill Jennings & Every LLP
(86) International application number: PCT/CN2024/102767
(87) International publication number: WO 2025/007828

(57) **Abstract**

This application provides a static linking method and a related apparatus. In a scenario in which a third-party component and an operating system are fully statically linked on an MCU device, in the static linking method provided in this application, a dependency of the third-party component on an actual storage address of a system function in the operating system and a dependency of a system application on an actual storage address of the third-party component are isolated by using a binary difference isolation layer, to decouple the third-party component from the operating system. Both the third-party component and the operating system may be independently updated without affecting each other. This can reduce costs of updating the third-party component and the operating system.

## Description

This application claims priority to Chinese Patent Application No. 202310829978.8, filed with the China National Intellectual Property Administration on July 6, 2023 and entitled "STATIC LINKING METHOD AND RELATED APPARATUS", which is incorporated herein by reference in its entirety.

### TECHNICAL FIELD

This application relates to the field of terminal technologies, and in particular, to a static linking method and a related apparatus.

### BACKGROUND

A source file of an application needs to be compiled and linked to generate an executable file, to enable an electronic device to run the application. When a static library is used for static linking, a compiler and a linker relocate a symbol in the source file and convert a reference relationship of the symbol into an absolute address. Therefore, in the finally generated executable file, all symbols such as code and data are mapped and stored to a unique fixed physical address in a memory. The application is strongly coupled to the static library (or an operating system). When an update of the static library (or the operating system) causes a change in a function that the application needs to reference from the static library, the source file of the application needs to be recompiled and relinked. This leads to high costs of updating the static library or the operating system.

### SUMMARY

This application provides a static linking method and a related apparatus. A dependency of a third-party component on an actual storage address of a system function in an operating system and a dependency of a system application on an actual storage address of the third-party component are isolated by introducing a binary difference isolation layer, to decouple the third-party component from the operating system. Both the third-party component and the operating system may be independently updated without affecting each other. This can reduce costs of updating the third-party component and the operating system.

According to a first aspect, this application provides a static linking method. The method is applied to an electronic device. The electronic device includes a first operating system. A first call instruction is stored in a first storage area corresponding to a first address on the electronic device. The first call instruction is used to call a first system function provided by the first operating system. The electronic device updates the first operating system, where the first operating system is updated through static linking. The electronic device updates the first call instruction in the first storage area to a second call instruction, where the second call instruction is used to call a first system function provided by an updated first operating system. The electronic device runs a first component in the updated first operating system, obtains the second call instruction from the first storage area based on the first address, and executes the second call instruction to enable the first component to call the first system function.

The first address may be a fixed address pre-agreed-upon by a component provider and an integrator, and is used to store a binary difference isolation layer (or referred to as a system isolation layer) used to encapsulate the first system function. Both the first call instruction and the second call instruction may be binary instructions generated by statically compiling and linking the system isolation layer used to encapsulate the first system function.

Before the first operating system is updated, the system isolation layer is compiled and linked together with the first operating system that has not been updated. The system isolation layer may obtain an actual storage address of the first system function on an electronic device on which the first operating system that has not been updated is loaded. The system isolation layer may be compiled and linked into the first call instruction. After the first operating system is updated, the system isolation layer may be compiled and linked together with the updated first operating system. The system isolation layer may obtain an actual storage address of the first system function on an electronic device on which the updated first operating system is loaded. The system isolation layer may be compiled and linked into the second call instruction. Because an actual storage address of the first system function may vary before and after the first operating system is updated, the first call instruction is different from the second call instruction.

A source program of the first component may be statically linked into an executable file based on the first address. The executable file of the first component may include the first address.

The first component may be a third-party component or a system application.

In some embodiments, the electronic device may store the first operating system in a ROM, and store the executable file of the first component in a flash. After being powered on, the electronic device may read the executable file of the first component from the flash to a RAM. Therefore, when the electronic device updates the first operating system in the ROM, the executable file of the first component in the flash and the executable file of the first component in the RAM may not be affected. This can ensure that the first operating system and the first component can be independently updated. In some other embodiments, the electronic device may store both an executable file of the first operating system and the executable file of the first component in a ROM. The ROM may be divided into storage areas. The executable file of the first operating system and the executable file of the first component may be separately stored in two independent storage areas in the ROM. When the ROM is re-programmed on the electronic device to update data, all data in an independent storage area may be updated, and data in another independent storage area remains unchanged. This can also ensure that the first operating system and the first component can be independently updated.

It can be learned that, regardless of whether the first operating system is updated, the first component can find, based on a fixed address (for example, the first address), the system isolation layer used to encapsulate the first system function, to call the first system function by using the system isolation layer. When the first operating system is updated, the system isolation layer, in place of the component, may sense a change in the first operating system, and encapsulate an updated system function of the first operating system based on the change in the first operating system. In this way, the first component may not sense the change in the first operating system. When the first operating system is updated, the component may not need to be recompiled or relinked. In this way, the first operating system can be updated independently of the component, to reduce system update costs.

With reference to the first aspect, in some embodiments, when running the first component in the first operating system that has not been updated, the electronic device obtains the first call instruction from the first storage area based on the first address, and executes the first call instruction to enable the first component to call the first system function.

It can be learned that, before and after the operating system is updated, a storage address of the system isolation layer (for example, the first call instruction or the second call instruction obtained by compiling and linking the system isolation layer) used to encapsulate the first system function remains unchanged. The first component may always find, based on a fixed address (for example, the first address), the system isolation layer used to encapsulate the first system function, to call the first system function by using the system isolation layer. Therefore, even if the first operating system is updated, the first component may not need to be updated. This can reduce system update costs.

With reference to the first aspect, in some embodiments, the first call instruction includes a storage address of the first system function on the electronic device before the first operating system is updated, and the second call instruction includes a storage address, obtained through the update of the first operating system, of the first system function on the electronic device. The storage address of the first system function on the electronic device may be located in the ROM of the electronic device.

With reference to the first aspect, in some embodiments, the first component stored on the electronic device remains unchanged before and after the first operating system is updated. Specifically, that the first component remains unchanged may indicate that the executable file of the first component that is stored on the electronic device remains unchanged.

With reference to the first aspect, in some embodiments, the electronic device updates the first component, where an updated first component still needs to call the first system function, and the first component is updated through static linking; and the electronic device runs the updated first component in the first operating system that has not been updated, obtains the first call instruction from the first storage area based on the first address, and executes the first call instruction to enable the updated first component to call the first system function.

When the first component is updated, the updated first component may be compiled and linked and then published to the electronic device. The electronic device may update the executable file of the first component that is stored in the memory.

It can be learned that, when the first component is updated, a source program of the updated first component may still be statically linked into an executable file based on a fixed address (for example, the first address) used to encapsulate the first system function. In this case, the updated first component may still find, based on the fixed address (for example, the first address), the system isolation layer used to encapsulate the first system function, to call the first system function by using the system isolation layer. During the update of the first component, whether the first operating system is updated may not need to be considered.

With reference to the first aspect, in some embodiments, a third call instruction is stored in a second storage area corresponding to a second address on the electronic device, the third call instruction is used to call a second system function provided by the first operating system that has not been updated, and the updated first component further needs to call the second system function. The electronic device runs the updated first component in the first operating system that has not been updated, obtains the third call instruction from the second storage area based on the second address, and executes the first call instruction to enable the updated first component to call the second system function.

The third call instruction may include the storage address of the first system function on the electronic device before the first operating system is updated.

When the first operating system is updated, a system isolation layer used to encapsulate the second system function may be compiled and linked together with the updated first operating system, and the system isolation layer may obtain an actual storage address of the second system function on the electronic device on which the updated first operating system is loaded. A call instruction generated by recompiling and relinking the system isolation layer used to encapsulate the second system function may include the storage address, obtained through the update of the first operating system, of the first system function on the electronic device, and the call instruction may still be stored in the second storage area corresponding to the second address.

It can be learned that the first component may need to call a plurality of system functions, and the system functions may be respectively called by using system isolation layers used to encapsulate the system functions.

With reference to the first aspect, in some embodiments, the electronic device further includes a second component and a third component, the second component is a third-party component, the third component is a system application, the third component needs to call the second component, a fourth call instruction is stored in a third storage area corresponding to a third address on the electronic device, and the fourth call instruction is used to call the second component. The electronic device updates the second component, where the second component is updated through static linking. The electronic device updates the fourth call instruction in the third storage area to a fifth call instruction, where the fifth call instruction is used to call an updated second component. The electronic device runs the third component after updating the second component, obtains the fifth call instruction from the third storage area based on the third address, and executes the fifth call instruction to enable the third component to call the second component.

The third address may be a fixed address pre-agreed-upon by a component provider and an integrator, and is used to store a binary difference isolation layer (or referred to as a component isolation layer) used to encapsulate the second component. The fourth call instruction and the fifth call instruction may be binary instructions generated by statically compiling and linking the component isolation layer used to encapsulate the second component.

Before the second component is updated, the component isolation layer is compiled and linked together with the second component that has not been updated. The component isolation layer may obtain an actual storage address, on the electronic device, of the second component that has not been updated. The component isolation layer may be compiled and linked into the fourth call instruction. After the second component is updated, the component isolation layer is compiled and linked together with the updated second component. The component isolation layer may obtain an actual storage address of the updated second component on the electronic device. The component isolation layer may be compiled and linked into the fifth call instruction. Because an actual storage address of the second component on the electronic device may vary before and after the second component is updated, the fourth call instruction is different from the fifth call instruction.

A source program of the third component may be statically linked into an executable file based on the third address. The executable file of the third component may include the third address.

It can be learned that, when a third-party component is updated, a system application and an operating system may not need to be updated correspondingly. To enable the system application to still call an updated third-party component without being updated, the electronic device may update a component isolation layer at a fixed address used to encapsulate the third-party component. The system application may find an updated component isolation layer based on the fixed address, to call the updated third-party component by using the component isolation layer. In the foregoing method, costs of updating the third-party component can be effectively reduced, and efficiency of updating the third-party component by the electronic device can be improved.

With reference to the first aspect, in some embodiments, the electronic device runs the third component before updating the second component, obtains the fourth call instruction from the third storage area based on the third address, and executes the fourth call instruction to enable the third component to call the second component.

With reference to the first aspect, in some embodiments, the fourth call instruction includes a storage address, on the electronic device, of the second component that has not been updated, and the fifth call instruction includes a storage address of the updated second component on the electronic device.

When the second electronic device is stored in the ROM of the electronic device, the storage address of the second component that is included in the fourth call instruction and the storage address of the second component that is included in the fifth call instruction may be addresses in the ROM. When the second component is stored in the flash of the electronic device, because an executable file of the second component is read to the RAM, the storage address of the second component that is included in the fourth call instruction the storage address of the second component that is included in the fifth call instruction may be addresses in the RAM.

With reference to the first aspect, in some embodiments, both the third component and the first operating system that are stored on the electronic device remain unchanged before and after the second component is updated. Specifically, that the third component and the first operating system remain unchanged may indicate that the executable file of the first component that is stored on the electronic device remains unchanged, and the executable file of the first operating system remains unchanged.

With reference to the first aspect, in some embodiments, update content of the first operating system includes one or more of the following: a storage address of the first system function changes, and content of the first system function changes.

With reference to the first aspect, in some embodiments, the first storage area is a storage area in the ROM in the electronic device. Alternatively, both the second storage area and the third storage area may be storage areas in the ROM in the electronic device.

According to a second aspect, this application provides an electronic device. The electronic device includes a memory and a processor. The memory may be configured to store a computer program. The processor may be configured to call the computer program, to enable the electronic device to perform the method according to any one of the possible implementations of the first aspect.

According to a third aspect, this application further provides an electronic device. The electronic device may be a first electronic device. The first electronic device includes a component providing module and a call interface providing module. The component providing module is configured to provide a first component, where the first component needs to call a first system function provided by a first operating system, and the first component is statically linked and then published to a second electronic device including the first operating system. The call interface providing module is configured to provide a first interface, where the first interface is configured to encapsulate the first system function in a first storage area corresponding to a first address on the second electronic device, the first interface is statically linked and then published to the second electronic device, and a program for implementing the first component includes the first address.

The first electronic device may represent a device used by a component provider to develop and publish a component or a binary difference isolation layer. The second electronic device may be a device product provided by an integrator. The second electronic device may include the first operating system, a system application, a third-party component, and the like.

The first electronic device may provide the first component for the integrator (an integrator server) through the component providing module, and provide the first interface for the integrator through the call interface providing module. The first interface may also be referred to as a system isolation layer. The first interface may be statically linked together with the first operating system. The first interface obtains an actual storage address of the first system function on the second electronic device on which the first operating system is loaded, and the system isolation layer may be compiled and linked into a first call instruction. When the first operating system is updated, the first interface may be compiled and linked together with an updated first operating system. The first interface may obtain an actual storage address of the first system function on an electronic device on which the updated first operating system is loaded. The first interface may be compiled and linked into a second call instruction. Because an actual storage address of the first system function may vary before and after the first operating system is updated, the first call instruction is different from the second call instruction. Both the first call instruction and the second call instruction may be stored in a storage area corresponding to a fixed address on the second electronic device.

It can be learned that the first electronic device may provide the first component and the first interface used to encapsulate the first system function. After the first component is published to the second electronic device, whether the first operating system on the second electronic device changes may not need to be sensed. The first component may always find the first interface based on a fixed storage address of the first interface on the second electronic device, to call the first system function by using the first interface. Even if the first operating system on the second electronic device is updated, the first electronic device may not need to update the first component or the first interface, and the first component may not need to be recompiled or relinked and then published to the second electronic device.

With reference to the third aspect, in some embodiments, the first interface obtains, in a static linking stage, a storage address of the first system function on the second electronic device, and generates, after the static linking, a call instruction used to call the first system function.

With reference to the third aspect, in some embodiments, the component providing module is further configured to provide a second component, where the second component is called by a third component on the second electronic device, and the second component is statically linked and then published to the second electronic device; and the call interface providing module is further configured to provide a second interface, where the second interface is configured to encapsulate the second component in a third storage area corresponding to a third address on the second electronic device, and the second interface is statically linked and then published to the second electronic device.

The second component may be a third-party component, and the third component may be a system application. The third component may be developed by a manufacturer of the second electronic device. The first electronic device may provide the second component for the integrator (the integrator server) through the component providing module, and provide the second interface for the integrator through the call interface providing module. The second interface may also be referred to as a component isolation layer. The second interface is statically linked together with the second component. The second interface obtains an actual storage address of the second component on the second electronic device. The second interface may be compiled and linked into a fourth call instruction.

With reference to the third aspect, in some embodiments, the component providing module is further configured to provide an updated second component, where the updated second component is statically linked and then published to the second electronic device, and the second interface obtains, in a static linking stage, a storage address of the updated second component on the second electronic device, and generates, after the static linking, a call instruction used to call the updated second component. The call instruction generated by statically linking the second interface and the updated second component may be a fifth call instruction. Because an actual storage address of the second component on the electronic device may vary before and after the second component is updated, the fourth call instruction is different from the fifth call instruction.

It can be learned that, when a third-party component is updated, a system application and an operating system may not need to be updated correspondingly. To enable the system application to still call an updated third-party component without being updated, the electronic device may update a component isolation layer at a fixed address used to encapsulate the third-party component. The system application may find an updated component isolation layer based on the fixed address, to call the updated third-party component by using the component isolation layer. In the foregoing method, costs of updating the third-party component can be effectively reduced, and efficiency of updating the third-party component by the electronic device can be improved.

According to a fourth aspect, this application provides a computer-readable storage medium, including instructions. When the instructions are run on an electronic device, the electronic device is enabled to perform the method according to any one of the possible implementations of the first aspect.

According to a fifth aspect, this application provides a computer program product. The computer program product may include computer instructions. When the computer instructions are run on an electronic device, the electronic device is enabled to perform the method according to any one of the possible implementations of the first aspect.

According to a sixth aspect, this application provides a chip. The chip is used in an electronic device. The chip includes one or more processors. The processor is configured to call computer instructions to enable the electronic device to perform the method according to any one of the possible implementations of the first aspect.

It can be understood that all of the electronic device provided in the second aspect, the electronic device provided in the third aspect, the computer-readable storage medium provided in the fourth aspect, the computer program product provided in the fifth aspect, and the chip provided in the sixth aspect are configured to perform the methods provided in embodiments of this application. Therefore, for beneficial effects that can be achieved by the electronic device, the computer-readable storage medium, the computer program product, and the chip, refer to the beneficial effects of the corresponding methods. Details are not described herein again.

### BRIEF DESCRIPTION OF DRAWINGS

FIG. 1A is a diagram of generating an executable file according to an embodiment of this application;
FIG. 1B is a diagram of static linking according to an embodiment of this application;
FIG. 1C is a diagram in which an executable file and a static library are stored in a ROM according to an embodiment of this application;
FIG. 2 is a diagram of compiling and linking a component in different compilation environments according to an embodiment of this application;
FIG. 3 is a diagram of compiling and linking a component based on a binary difference isolation layer according to an embodiment of this application;
FIG. 4A is a diagram of a hardware structure of an electronic device 100 according to an embodiment of this application;
FIG. 4B is a block diagram of a software structure of an electronic device 100 according to an embodiment of this application;
FIG. 5A is a diagram of publishing a component and an operating system according to an embodiment of this application;
FIG. 5B is a diagram of storage locations of a third-party component, a binary difference isolation layer, a system application, and an operating system on an electronic device 100 according to an embodiment of this application;
FIG. 5C is another diagram of storage locations of a third-party component, a binary difference isolation layer, a system application, and an operating system on an electronic device 100 according to an embodiment of this application;
FIG. 6A is a diagram of updating a component according to an embodiment of this application;
FIG. 6B is a diagram of storage locations of a third-party component, a binary difference isolation layer, a system application, and an operating system on an electronic device 100 according to an embodiment of this application;
FIG. 7A is a diagram of updating an operating system according to an embodiment of this application;
FIG. 7B is a diagram of storage locations of a third-party component, a binary difference isolation layer, a system application, and an operating system on an electronic device 100 according to an embodiment of this application; and
FIG. 8 is a diagram of an architecture of a communication system according to an embodiment of this application.

### DESCRIPTION OF EMBODIMENTS

The following describes the technical solutions in embodiments of this application with reference to the accompanying drawings in embodiments of this application. In the descriptions of embodiments of this application, terms used in the following embodiments are merely intended to describe specific embodiments, but not to limit this application. The terms "a", "the", "the foregoing", and "this" of singular forms used in this specification and the appended claims of this application are also intended to include expressions such as "one or more", unless otherwise specified in the context clearly. It should be further understood that, in the following embodiments of this application, "at least one" and "one or more" mean one or more (including two). The term "and/or" describes an association relationship between associated objects, and indicates that three relationships may exist. For example, A and/or B may indicate the following cases: Only A exists, both A and B exist, and only B exists, where A and B may be in a singular form or a plural form. The character "/" usually indicates an "or" relationship between the associated objects.

Reference to "an embodiment", "some embodiments", or the like described in this specification means that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "including but not limited to", unless otherwise specifically emphasized in another manner. The term "connection" includes direct connection and indirect connection, unless otherwise specified. "First" and "second" are merely intended for description, and shall not be understood as an indication or implication of relative importance or an implicit indication of a quantity of indicated technical features.

In embodiments of this application, the term "in an example", "for example", or the like is used to give an example, an illustration, or a description. Any embodiment or design scheme described with "in an example" or "for example" in embodiments of this application should not be construed as being more preferred or more advantageous than another embodiment or design scheme. To be precise, the term "in an example", "for example", or the like is intended to present a related concept in a specific manner.

For ease of understanding, concepts of components in this application are first described herein.

A **component** may be a computer program for providing one or more functions. A component on an electronic device may include a third-party component and a system component. The third-party component may be a component not provided or developed by a manufacturer of the electronic device. The system component may be a component provided or developed by the manufacturer of the electronic device.

A type of the third-party component may include an application (application, APP), a service, a utility function, and the like. In some embodiments, the service may be obtained by dividing the application at a smaller granularity based on a provided function. One application may include one or more services. For example, a shopping application may include a commodity browsing service (providing a commodity browsing function), a shopping cart service (providing a function of adding a commodity to a shopping cart), and a payment service (providing a payment function). The foregoing services may also be referred to as atomic services or the like. In the third-party component, an application (or a service) not provided by the manufacturer of the electronic device may also be referred to as a third-party application (or a third-party service) or the like, and a utility function not provided by the manufacturer of the electronic device may also be referred to as a third-party function or the like. The third-party function may be called by the system component.

A type of the system component may include an APP and a service. The system component may also be referred to as a system application or the like. In subsequent embodiments of this application, a static linking method provided in this application is described by using the name "system application".

In some embodiments, a component of the APP or service type may be displayed on an interface as a visual interface element like an APP icon, a card, a shortcut function mode, or a widget, to enable a user to use a function provided by the component.

An **electronic device** to which the static linking method provided in this application is applied may include a device that uses a microcontroller (microcontroller unit, MCU) as a computing core and that has the following service requirements: a small size, low costs, low power consumption, and the like. In other words, the electronic device in this application may be distinguished from an intelligent device with a powerful processing capability and storage capability, for example, a mobile phone or a personal computer. For example, the electronic device in this application may be a wearable device like a smartwatch, a smart band, or smart glasses, or may be an internet of things device like a smart speaker, a smart air conditioner, a smart refrigerator, a smart television, a smart lock, a smart gateway, an internet of vehicles roadside device, an internet of things sensor, or a smart medical device. A type of the electronic device is not limited in embodiments of this application.

Optionally, the electronic device in this application may alternatively include a device in which a primary core processor and an MCU processor coexist. A central processing unit (central processing unit, CPU) and a memory may be integrated in the MCU processor. The memory may include a read-only memory (read-only memory, ROM) and a random access memory (random access memory, RAM). The electronic device has a requirement of using as small RAM space as possible in the MCU processor. The MCU processor can help reduce load of the primary core processor and reduce power consumption of the device. The primary core processor may include one or more of the following processors: an application processor, a graphics processing unit, an image signal processor, a neural network processor, and the like. For example, when the primary core processor is in a sleep state, the MCU processor may keep operating in a low-power state and monitor an event that needs to wake up the primary core processor. The event for waking up the primary core processor may include a voice wakeup instruction or the like. The MCU processor may wake up the primary core processor after detecting the event for waking up the primary core processor. In this way, the primary core processor may not need to remain in an operating state in real time. This helps reduce power consumption of the device.

It can be understood that an MCU may be used in an electronic device like a wearable device or an internet of things device to meet the following service requirements: a small size, low costs, and low power consumption. The MCU plays an important role in increasing device lifetime, reducing load of a primary core processor, and achieving low power consumption. The MCU usually includes only one CPU, one ROM, one RAM, and basic peripherals (a serial interface, a timer, and the like). These limited hardware resources may be integrated in one chip.

Due to limitations on resources and performance, a system image on the electronic device in which the MCU is used may be statically compiled and stored in the ROM, and a component (for example, a third-party component or a system application) may also be statically compiled into an executable file and stored in the ROM. The system image may be a computer program corresponding to an operating system. In this way, the electronic device in which the MCU is used (which may be referred to as an MCU device) may directly fetch an instruction on the chip and execute a corresponding instruction. Fetching the instruction on the chip may indicate that the CPU on the MCU reads, from the ROM, a binary instruction needed for running a component. Then the CPU may execute the read binary instruction, to run the component to provide a corresponding function. Through the static compilation, RAM occupation of an application program during running can be reduced, to reduce a requirement for RAM resources. Limited RAM space on the electronic device in which the MCU is used may be used to store stacks and variables.

However, during the static compilation, an actual address is generated for a fully statically linked function in a linking stage. After a third-party component and a system application are statically linked, a system function needs to be called based on an actual address of the system function. After a system application is statically linked, a third-party function needs to be called based on an actual address of the third-party function.

In some embodiments, during running, a third-party component may need to call a system function provided by an operating system. After the third-party component is statically compiled and linked, an executable file of the third-party component may record an actual storage address of the system function that the third-party component needs to call. When running the third-party component, the electronic device may read and execute the executable file of the third-party component, and call the corresponding system function based on the actual storage address of the system function in the executable file of the third-party component.

Therefore, when the actual storage address of the system function that the third-party component needs to call changes due to an update of the operating system, the electronic device needs to update the third-party component correspondingly. Otherwise, the third-party component cannot correctly call the needed system function based on the original actual storage address of the system function. This leads to high costs of updating the operating system.

In some embodiments, in addition to depending on an operating system, a system application may further need to call one or more third-party functions (to be specific, a third-party component of the utility function type) during running. The system application depends on the operating system. For a process of calling a system function, refer to the foregoing process of calling the system function by the third-party component. After the system application is statically compiled and linked, an executable file of the system application may record an actual storage address of a third-party function that the system application needs to call. When running the system application, the electronic device may read and execute the executable file of the system application, and call the corresponding third-party function based on the actual storage address of the third-party function in the executable file of the system application.

Therefore, when the actual storage address of the third-party function changes due to an update of the third-party function, the electronic device needs to update the operating system correspondingly. Otherwise, the system application cannot correctly call the needed third-party function based on the original actual storage address of the third-party function. This leads to high costs of updating the third-party function.

It can be learned that, currently, after a component and an operating system are statically compiled, an address of the component and an address of the operating system are coupled, and an address of a system application and an address of a third-party function are also coupled. Upon any modification, full linking needs to be re-performed, and the component or the system cannot be separately modified.

In some embodiments, the electronic device may dynamically link, by using a dynamic loading technology, a resource like a function needed by an application program during running, to resolve a problem caused by coupling between a component and a system. Devices like a personal computer (personal computer, PC) and a mobile phone have a dynamic loading capability. A system first reads a library file to a memory, maps an address of the library file to memory address space of an application program, then associates a function address in a symbol table with a function call in the program, and finally accesses an interface function in the library file. The symbol table may include a relative location relationship (namely, an offset address) of the interface function in the library file, and may be used to determine an actual address, in the memory, of each interface function in the library file based on an initial address of the library file in the memory. However, in the foregoing solution, sufficient memory (RAM) space is first needed for storing the loaded library file. However, RAM space of an MCU is precious and is insufficient to support loading of a large quantity of library files to the RAM for running. In addition, a memory management unit (memory management unit, MMU) is needed for an address mapping function, but most MCU processors do not have an MMU component. The physical weakness cannot be overcome. Therefore, the conventional dynamic loading technology cannot be directly applied to a wearable device or an internet of things device.

In some other embodiments, a compiler may generate an interface function address table in a compilation stage of a system. The interface function address table may include an actual address of an interface function. The system may load the interface function address table to a memory (RAM) of a device, and transmit the interface function address table to an application program. During running, the application program may determine, based on the interface function address table, an address of an interface function that the application program needs to call, to access the corresponding interface function. For example, a global offset table (global offset table, GOT) is generated in the compilation stage. The GOT table may include an address mapping table for global symbols in an executable file. The application program may obtain an address of a symbol by searching the GOT table, to access a corresponding interface function. Alternatively, an executable file is divided into independent functional modules, each module maintains an interface function address list of the module, and another module may find an address of an interface function by using the interface function address list.

However, the interface function address table (for example, the GOT table) depends on generation by the compiler, and depends on a capability of the compiler. In addition, generating an index for all functions essentially causes binary bloat. In the foregoing methods, software needs to implement a function similar to address mapping of an MMU. A function address is recalculated by using initial address segment information and a found offset address. A calculation process is complex. A loaded component file needs to wait for a large memory (RAM) for caching. This imposes a high requirement on RAM resources, and it is difficult to apply the methods to devices that need to use as small RAM space as possible.

This application provides a static linking method, to isolate a dependency relationship between a third-party component and an operating system, so that both the third-party component and the operating system can be independently updated. A dependency of the operating system on the third-party component may lie in that a system application needs to call the third-party component (for example, a third-party function). When either of a third-party component and an operating system on an electronic device is updated, the other may not need to be updated correspondingly. This can reduce time for updating the third-party component and time for updating the operating system. Especially when the third-party component is updated, because the operating system does not need to be updated, time for updating the third-party component by the electronic device may be greatly reduced.

The following describes a compilation and linking process of a component.

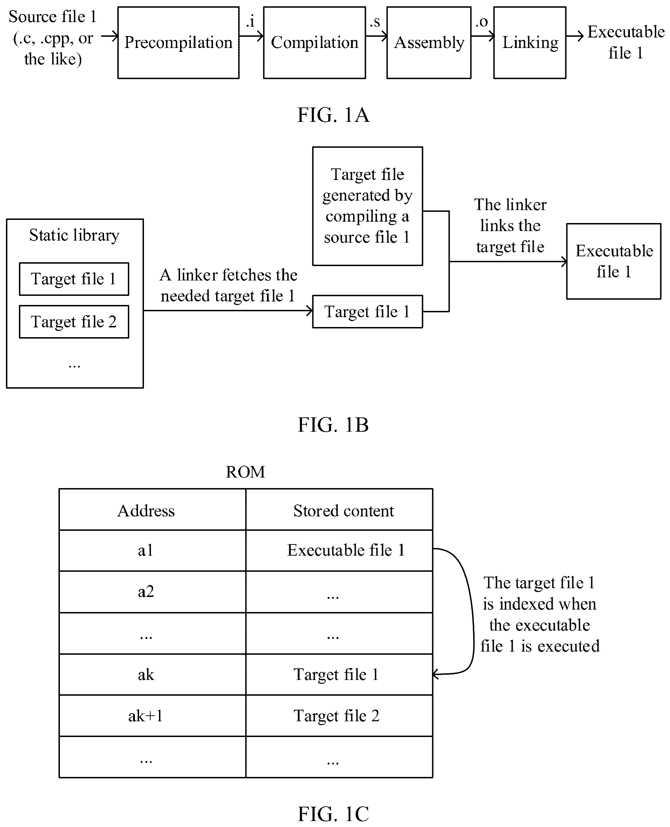

During development of a component, a developer compiles a source file of the component by using high-level language code, to implement a function corresponding to the component. The source file of the component may be, for example, a file with a file name extension of .c or .cpp. The source file may also be referred to as source code. To be converted into an executable file that can be recognized and executed by an electronic device, the source file of the component needs to undergo processing processes shown in FIG. 1A: precompilation, compilation, assembly, and linking. The executable file may be a binary file including binary instructions. The electronic device may execute the binary instructions in the executable file to implement the function corresponding to the component.

As shown in FIG. 1A, a source file 1 may be converted into a file with a file name extension of .i (that is, an .i file) through precompilation. In a precompilation stage, a compiler may process various preprocessing commands in the source file, for example, load a header file, replace a macro, compile a condition, or remove a comment. The .i file may be converted into a file with a file name extension of .s (that is, an .s file) through compilation. In a compilation stage, the compiler may perform syntax analysis, semantic analysis, and symbol summary on the .i file to generate assembly code. The .s file may be converted into a file with a file name extension of .o (that is, an .o file, where the .o file may also be referred to as a target file, target code, or the like) through assembly. In an assembly stage, the compiler may convert the assembly code into machine code. A linker may link the target file and a needed related resource to generate an executable file 1. For example, the related resource used for linking may include a system function in an operating system.

The precompilation, compilation, and assembly performed by the compiler may be collectively referred to as compilation. That is, the source file 1 may be converted into the executable file 1 through compilation and linking. The compiler is a computer program, and may be configured to translate a source file written in a high-level programming language into a target program in an equivalent machine language format, so that a computer can recognize and run the target program. The linker is a computer program, and may be configured to link, into an executable file, one or more target files generated by the compiler and a target file in a library file. In a development stage of a component, a developer may use the compiler to compile a source file of the component into the target file, and use the linker to link the target file of the component into the executable file.

FIG. 1B is an example diagram of static linking.

As shown in FIG. 1B, a static library may include a plurality of target files, for example, a target file 1 and a target file 2. The static library may facilitate reuse of a computer program. One target file in the static library may include one or more utility functions for implementing a specific function (for example, a read/write function, an arithmetic operation function, or the like). The one or more utility functions may be system functions provided by an operating system. A component may reference a target file in the static library to call a system function in the target file. In some embodiments, the static library may be statically compiled together with the operating system and then stored in a ROM of an electronic device.

During static linking, a linker may extract, from the static library, a resource needed by a source file 1, for example, a target file 1, and link the target file 1 and a target file generated by compiling the source file 1, to generate an executable file 1. The executable file 1 may include: symbols such as code and data in the target file generated by compiling the source file 1, and code that indicates a storage location of the target file 1 and that is used to reference the target file 1. The executable file 1 may also be stored in the ROM of the electronic device. In this way, the electronic device can directly fetch an on-chip instruction from the ROM, and execute an instruction in the executable file 1.

In some embodiments, the static library may be a part of the operating system. A utility function included in a target file in the static library may be referred to as a system function. A component calling a utility function in the static library based on a statically linked resource in an executable file during running may be referred to as a system call.

In some embodiments, in addition to the system function in the static library, the electronic device further includes a third-party function. During compilation and linking of a system application, a third-party function that needs to be called may be linked to an executable file of the system application through static linking. In this way, the system application can call the third-party function based on a statically linked resource in the executable file during running.

FIG. 1C is an example diagram in which an executable file and a static library are stored in a ROM.

As shown in FIG. 1C, in the ROM, an executable file 1 may be stored in a storage area with an address of a1, a target file 1 may be stored in a storage area with an address of ak, and a target file 2 may be stored in a storage area with an address of ak+1. When the executable file 1 needs to be executed, an electronic device may obtain the executable file 1 from the storage area with an address of a1 in the ROM, and execute an instruction in the executable file 1. When execution proceeds to an instruction that is in the executable file 1 and that is related to the target file 1, the electronic device may index the target file 1 in the ROM according to the instruction. The executable file 1 may record a storage address (that is, ak) of the target file 1 in the ROM. In this way, the electronic device can find the target file 1 in the storage area with an address of ak in the ROM through indexing, to execute an instruction in the target file 1.

In some embodiments, a system application may be coupled to an operating system. An executable file of the system application, together with the operating system, may be stored in a ROM on an MCU chip of the electronic device. An executable file of a third-party component may also be stored in the ROM on the MCU chip.

In some other embodiments, the executable file of the third-party component may alternatively be stored in a flash memory (flash memory) on the MCU chip. The flash memory may be referred to as a flash for short. The flash is a non-volatile storage device. A difference from the ROM lies in: The ROM can support random access from a CPU on the MCU chip, but the flash does not support random access. When the executable file of the third-party component is stored in the flash, the electronic device may read the executable file of the third-party component from the flash to the RAM, and then the electronic device may fetch an on-chip instruction from the RAM to obtain the executable file of the third-party component, to run the third-party component. That is, if a component 1 is a third-party component, an executable file 1 of the component 1 may be stored in the flash.

It should be noted that a location at which the third-party component is read from the flash and stored in the RAM may be determined in a compilation and linking stage of the third-party component. To be specific, the RAM includes a preset location for storing the executable file of the third-party component that is read from the flash. The location, in the RAM, used to store the executable file of the third-party component may also be referred to as an execution location or an execution address of the third-party component.

Storage locations of the executable file and the static library shown in FIG. 1C are merely examples for description of this application, and should not constitute a limitation on this application.

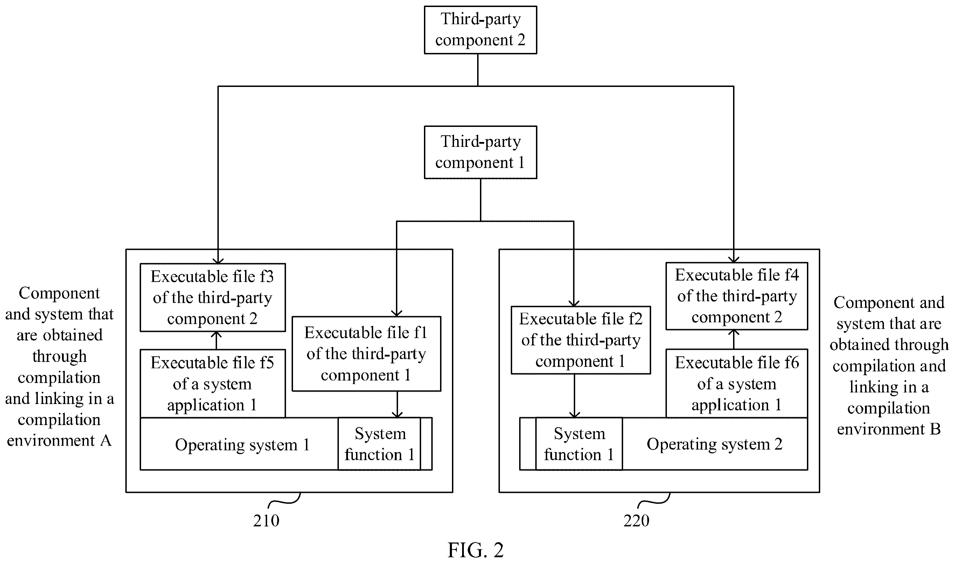

**FIG. 2** **is an example diagram of compiling and linking a component in different compilation environments.**

As shown in FIG. 2, an area 210 may include a component and a system that are obtained through compilation and linking in a compilation environment A: an executable file f1 of a third-party component 1, an executable file f3 of a third-party component 2, an executable file f5 of a system application 1, and an operating system 1. An area 220 may include a component and a system that are obtained through compilation and linking in a compilation environment B: an executable file f2 of the third-party component 1, an executable file f4 of the third-party component 2, an executable file f5 of the system application 1, and an operating system 2. The compilation environment A is different from the compilation environment B.

In some embodiments, the compilation environment A and the compilation environment B may be environments located on different servers. Both the compilation environment A and the compilation environment B may include a compiler and a linker. The compiler may be configured to compile a source program into a target file. The linker may be configured to statically link the target file into an executable file. A compiled and linked component (for example, the third-party component 1, the third-party component 2, or the system application 1) and a compiled and linked operating system in the area 210 may be stored in a memory of an electronic device (for example, stored in a ROM). Similarly, both a compiled and linked component and a compiled and linked operating system in the area 220 may be stored in the memory of the electronic device. Storage locations of the component and the operating system on the electronic device may be determined in a compilation and linking stage.

Both the operating system 1 and the operating system 2 may include a system function 1. For example, specific content of the system function 1 may be located in the target file 1 in the static library shown in FIG. 1B. To be specific, the target file 1 may be a target file corresponding to the system function 1, and may be used to implement a function of the system function 1.

In some embodiments, the operating system 1 and the operating system 2 may be different operating systems. The different operating systems may mean that source programs of the operating systems are different. A location of the system function 1 in the operating system 1 may be different from a location of the system function 1 in the operating system 2. In this case, after compilation and linking, a storage address of the system function 1 on an electronic device on which the operating system 1 is loaded is different from a storage address of the system function 1 on an electronic device on which the operating system 2 is loaded.

In some other embodiments, the operating system 1 and the operating system 2 may alternatively be a same operating system. The same operating systems may mean that source programs of the operating systems are the same. In a scenario in which a same operating system is compiled and linked in different compilation environments, because the compilation environments are different, a sequence of compiling and/or linking a source program of the operating system may vary. Therefore, after a same operating system is compiled and linked in different compilation environments, an actual storage address of a same system function may vary. Although the source programs of the operating system 1 and the operating system 2 are the same, after the operating system 1 and the operating system 2 are compiled and linked in different compilation environments (for example, the compilation environment A and the compilation environment B), a storage address of the system function 1 on an electronic device on which the operating system 1 is loaded is different from a storage address of the system function 1 on an electronic device on which the operating system 2 is loaded.

It can be learned from the foregoing embodiments that, in a scenario in which an operating system is updated, a source program of the operating system varies before and after the update. In this case, compared with an operating system that has not been updated, in an updated operating system, a storage address of a static library may change. For example, if a quantity of bytes occupied by a system function in the updated operating system increases, storage space used by the system function increases, and addresses of storage space used by other system functions may need to be sequentially moved backward. In this case, after the operating system is updated, a storage address of one or more system functions in the static library changes. In addition, when a same operating system is compiled and linked in different compilation environments, due to impact of the compilation environments, storage addresses of the static library in operating systems obtained through compilation and linking in different compilation environments may be different.

The third-party component 1 needs to call the system function 1 during running. In a process of statically linking the third-party component 1, the linker may write the storage address of the system function 1 into the executable file of the third-party component 1. In this way, when executing the executable file of the third-party component 1, the electronic device may find the system function 1 through indexing based on the storage address of the system function 1, to call the system function 1. Because locations of the system function 1 in the operating system 1 and the operating system 2 are different, executable files of the third-party component 1 that are generated in the compilation environment A and the compilation environment B are also different. For distinguishing, herein, the executable file f1 of the third-party component 1 represents an executable file of the third-party component 1 generated in the compilation environment A, and the executable file f2 of the third-party component 1 represents an executable file of the third-party component 1 generated in the compilation environment B. The executable file f1 of the third-party component 1 may record the storage address of the system function 1 on the electronic device on which the operating system 1 is loaded. The executable file f2 of the third-party component 1 may record the storage address of the system function 1 on the electronic device on which the operating system 2 is loaded. The executable file f1 of the third-party component 1 is applicable only to the operating system 1. The executable file f2 of the third-party component 1 is applicable only to the operating system 2.

Similarly, to distinguish between executable files of the third-party component 2 generated in different compilation environments, herein, the executable file f3 of the third-party component 2 represents an executable file of the third-party component 2 generated in the compilation environment A, and the executable file f4 of the third-party component 2 represents an executable file of the third-party component 2 generated in the compilation environment B. The third-party component 2 is a third-party component different from the third-party component 1. If the third-party component 2 needs to call a system function during running and locations of the system function in the operating system 1 and the operating system 2 are different, content of the executable file f3 of the third-party component 2 is different from content of the executable file f4 of the third-party component 2. If the third-party component 2 is a third-party function and does not need to call a system function during running, content of the executable file f3 of the third-party component 2 may be the same as content of the executable file f4 of the third-party component 2.

Because a sequence of compiling and/or linking a source program may vary in different compilation environments, a storage address of the executable file f3 of the third-party component 2 on the electronic device on which the operating system 1 is loaded may be different from a storage address of the executable file f4 of the third-party component 2 on the electronic device on which the operating system 2 is loaded.

Herein, an example in which the system application 1 needs to call the third-party component 2 during running is used for description.

In a process of statically linking the system application 1, the linker may write the storage address of the third-party component 2 into the executable file of the system application 1. In this way, when executing the executable file of the system application 1, the electronic device may find the third-party component 2 through indexing based on the storage address of the third-party component 2, to call the third-party component 2. Because the storage address of the executable file of the third-party component 2 on the electronic device on which the operating system 1 is loaded is different from the storage address of the executable file of the third-party component 2 on the electronic device on which the operating system 2 is loaded, executable files of the system application 1 that are generated in the compilation environment A and the compilation environment B are also different.

For distinguishing, the executable file f5 of the system application 1 may represent an executable file of the system application 1 generated in the compilation environment A, and the executable file f6 of the system application 1 may represent an executable file of the system application 1 generated in the compilation environment B. The executable file f5 of the system application 1 may record the storage address of the executable file f3 of the third-party component 2 on the electronic device on which the operating system 1 is loaded. The executable file f6 of the system application 1 may record the storage address of the executable file f4 of the third-party component 2 on the electronic device on which the operating system 2 is loaded. The executable file f5 of the system application 1 is applicable only to the operating system 1. The executable file f6 of the system application 1 is applicable only to operating system 2.

It can be learned from FIG. 2 that an executable file of a same component (for example, the third-party component 1 or the system application 1) cannot be reused in different operating systems. The different operating systems may include operating systems with different source programs, or operating systems that have a same source program but differ from each other after being compiled and linked in different compilation environments.

It can be learned from FIG. 1A, FIG. 1B, and FIG. 2 that, because static linking is used on an MCU device, a component and a static library on the MCU device are strongly coupled. To be specific, when the static library changes (for example, a storage address of the static library in a ROM changes), the component on the MCU device needs to be recompiled and relinked and then written into the MCU device. Otherwise, when executing an executable file of the component, the MCU device cannot find a needed resource based on a previously linked address of the static library. That is, a developer cannot separately modify the static library or an operating system on the MCU device. System update costs are high.

In addition, some system applications need to call a third-party component (for example, a third-party function) during running. After the system application is statically linked, an actual storage address of the system application is coupled to an actual storage address of the third-party component. To be specific, when the third-party component changes (for example, a storage address of the third-party component on an electronic device changes), the system application on the MCU device needs to be recompiled and relinked and then written into the MCU device. When the system application and the operating system are coupled and stored in an area of the MCU device together, that the system application needs to be recompiled and relinked means that the entire operating system needs to be recompiled and relinked. Therefore, a developer cannot separately modify the third-party component on the MCU device either. Costs of updating the third-party component are also high.

This application provides a static linking method, to independently update a component and an operating system by introducing a binary difference isolation layer. A case in which a component and an operating system are independently updated may include: A third-party component is independently updated without updating a system application or an operating system correspondingly, an operating system is independently updated without updating a third-party component correspondingly, or an operating system is independently updated without updating a system application correspondingly.

The binary difference isolation layer may be an interface used for a component to call a utility function (for example, a system function or a third-party function). The binary difference isolation layer may be used to encapsulate the utility function, to decouple an actual storage address of the component from an actual storage address of the utility function. The binary difference isolation layer may be stored at a preset fixed address after being compiled and linked. The component may call the binary difference isolation layer by using the fixed address, to call the utility function encapsulated by using the binary difference isolation layer. In this way, the component may not need to sense a change in the actual storage address of the utility function.

The binary difference isolation layer may include a system isolation layer and a component isolation layer.

The **system isolation layer** may be used to encapsulate a system function to decouple an actual storage address of a third-party component from an actual storage address of the system function. In some embodiments, the system isolation layer may be further used to decouple an actual storage address of a system application from an actual storage address of a system function. The system isolation layer may be statically linked together with an operating system and then written into an electronic device. During static linking of the system isolation layer and the operating system, the system isolation layer may obtain an actual storage address of a system function in the operating system. The electronic device may store, at a preset fixed address, a system isolation layer obtained through the static linking.

An executable file of the third-party component may include a fixed address of a system isolation layer in which a system function that the third-party component needs to call is encapsulated. In this way, the third-party component may always call the system isolation layer based on the fixed address, to find the system function from an actual storage address of the system function and call the system function.

The **component isolation layer** may be used to encapsulate a third-party function to decouple an actual storage address of a system application from an actual storage address of the third-party function. The component isolation layer may be statically linked together with the third-party function and then written into the electronic device. During static linking of the component isolation layer and the third-party function, the component isolation layer may obtain the actual storage address of the third-party function. The third-party function may be stored in a ROM or a flash. When the third-party function is stored in the ROM, the actual storage address of the third-party function may represent a storage address of the third-party function in the ROM. When the third-party function is stored in the flash, the actual storage address of the third-party function may represent a storage address of the third-party function in a RAM (that is, an execution address of the third-party function) after the third-party function is read from the flash to the RAM. The electronic device may store, at a preset fixed address, a component isolation layer obtained through the static linking.

An executable file of the system application may include a fixed address of a component isolation layer in which a third-party function that the system application needs to call is encapsulated. In this way, the system application may always call the component isolation layer based on the fixed address, to find the third-party function from an actual storage address of the third-party function and call the third-party function.

In some embodiments, the system isolation layer and the component isolation layer may be separately stored in different areas in a ROM of an MCU processor. Two areas, in the ROM, in which the storage system isolation layer and the component isolation layer are stored may be separately re-burnt without affecting each other. When the operating system is updated, the system isolation layer may be statically relinked together with the operating system and then written into the electronic device. Through the static relinking, the system isolation layer may obtain an actual storage address, obtained through the update of the operating system, of the system function. The electronic device may re-burn an area, in the ROM, in which the system isolation layer is stored, to burn, to the area, a system isolation layer obtained through the static relinking. When the third-party function is updated, the component isolation layer may be statically relinked together with the third-party function and then written into the electronic device. Through the static relinking, the component isolation layer may obtain an actual storage address, obtained through the update of the third-party function, of the third-party function. The electronic device may re-burn an area, in the ROM, in which the component isolation layer is stored, to burn, to the area, a component isolation layer obtained through the static relinking.

The fixed addresses used to store the binary difference isolation layer may be preset. For example, the fixed addresses may be determined through pre-communication between a component provider and a device manufacturer.

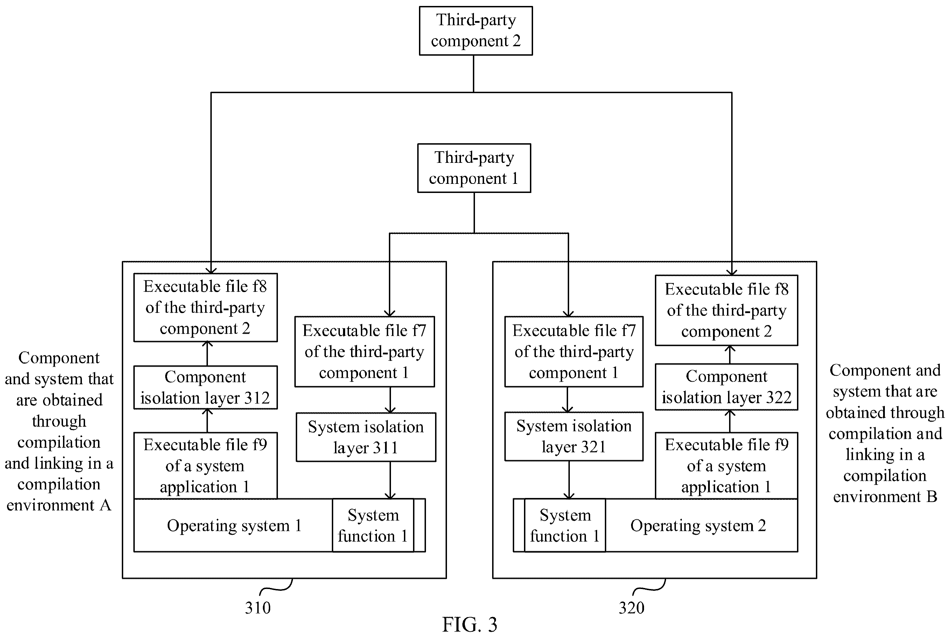

**FIG. 3** **is an example diagram of compiling and linking a component based on a binary difference isolation layer.**

As shown in FIG. 3, an area 310 may include a component and a system that are obtained through compilation and linking in a compilation environment A: an executable file f7 of a third-party component 1, an executable file f8 of a third-party component 2, an executable file f9 of a system application 1, a system isolation layer 311, a component isolation layer 312, and an operating system 1. An area 320 may include a component and a system that are obtained through compilation and linking in a compilation environment B: an executable file f7 of the third-party component 1, an executable file f8 of the third-party component 2, an executable file f9 of the system application 1, a system isolation layer 321, a component isolation layer 322, and an operating system 2.

For the compilation environment A, the compilation environment B, the operating system 1, and the operating system 2, refer to the foregoing descriptions of FIG. 2. Details are not described herein again.
1. Compile and link a component based on a system isolation layer.

It can be learned from the embodiment of FIG. 2 that an actual storage address of the system function 1 on the electronic device on which the operating system 1 is loaded is different from an actual storage address of the system function 1 on the electronic device on which the operating system 2 is loaded. In a process of compiling and linking the system isolation layer 311 in the compilation environment A, the actual storage address of the system function 1 on the electronic device on which the operating system 1 is loaded may be transmitted to the system isolation layer 311. The system isolation layer 311 may be stored at a fixed address on the electronic device. A linker in the compilation environment A may statically link the third-party component 1 based on the fixed address of the system isolation layer 311. Similarly, in a process of compiling and linking the system isolation layer 321 in the compilation environment B, the actual storage address of the system function 1 on the electronic device on which the operating system 2 is loaded may be transmitted to the system isolation layer 321. The system isolation layer 321 may be stored at a fixed address on the electronic device. A linker in the compilation environment B may statically link the third-party component 1 based on the fixed address of the system isolation layer 321.

The fixed address used to store the system isolation layer 311 may be the same as the fixed address used to store the system isolation layer 321. For example, the electronic device on which the operating system 1 is loaded and the electronic device loaded on which the operating system 2 is loaded may be devices of a same device manufacturer. A fixed address that is agreed upon by the device manufacturer and that is used to store a system isolation layer used to encapsulate the system function 1 may remain the same on different devices. In this case, executable files generated by statically linking the third-party component 1 in the compilation environment A and the compilation environment B are the same, for example, both are the executable file f7. The executable file f7 may record the fixed address of the system isolation layer 311 (namely, the fixed address of the system isolation layer 321).

It can be learned that, although the system function 1 is at different locations in the operating system 1 and the operating system 2, an address used to encapsulate the system function 1 may remain the same. To be specific, in different compilation environments, a same third-party component may be statically linked based on a fixed address of a system isolation layer used to encapsulate a to-be-called system function, to generate a same executable file. In this case, the executable file of the same third-party component can still be reused even in different operating systems. In the foregoing method, a dependency of a third-party component on an operating system may be isolated, to decouple an actual storage address of the third-party component from an actual storage address of a system function. When the operating system is updated, the third-party component may not need to be updated correspondingly.

Similarly, a system application may also call a system function by using the system isolation layer. For details, refer to the descriptions of calling a system function by a third-party application by using the system isolation layer. In the foregoing method, a dependency of a system application on an operating system may be isolated, to decouple an actual storage address of the system application from an actual storage address of a system function. When the operating system is updated, the system application may not need to be updated correspondingly.

2. Compile and link a system application based on a component isolation layer.

It can be learned from the foregoing embodiment of compiling and linking a component based on a system isolation layer that content of executable files generated by compiling and linking a same third-party component in different compilation environments may be the same. Therefore, content of executable files generated by compiling and linking the third-party component 2 in the compilation environment A and the compilation environment B may be the same, for example, both are the executable file f8. However, because a sequence of compiling and/or linking a program may vary in different compilation environments, an actual storage address of the executable file f8 of the third-party component 2 on the electronic device on which the operating system 1 is loaded may be different from an actual storage address of the executable file f8 of the third-party component 2 on the electronic device on which the operating system 2 is loaded.

In a process of compiling and linking the component isolation layer 312 in the compilation environment A, the actual storage address of the executable file f8 of the third-party component 2 on the electronic device on which the operating system 1 is loaded may be transmitted to the component isolation layer 312. The component isolation layer 312 may be stored at a fixed address on the electronic device. The linker in the compilation environment A may statically link the system application 1 based on the fixed address of the component isolation layer 312. Similarly, in a process of compiling and linking the component isolation layer 322 in the compilation environment B, the actual storage address of the executable file f8 of the third-party component 2 on the electronic device on which the operating system 2 is loaded may be transmitted to the component isolation layer 322. The component isolation layer 322 may be stored at a fixed address on the electronic device. The linker in the compilation environment B may statically link the system application 1 based on the fixed address of the component isolation layer 322.

The fixed address used to store the component isolation layer 312 may be the same as the fixed address used to store the component isolation layer 322. In this case, executable files generated by statically linking the system application 1 in the compilation environment A and the compilation environment B are the same, for example, both are the executable file f9. The executable file f9 may record the fixed address of the component isolation layer 312 (namely, the fixed address of the component isolation layer 322).

It can be learned that, although the third-party component 2 is stored at different locations on the electronic device after being compiled and linked in different compilation environments, an address used to encapsulate the third-party component 2 may remain the same. To be specific, in different compilation environments, a same system application may be statically linked based on a fixed address of a component isolation layer used to encapsulate a to-be-called third-party component (for example, a third-party function), to generate a same executable file. In this case, the executable file of the same system application can still be reused even if the third-party component changes. In the foregoing method, a dependency of an operating system (which may be specifically a system application coupled to the operating system) on a third-party component may be isolated, to decouple an actual storage address of the system application from an actual storage address of the third-party component. When the third-party component is updated, the system application and the operating system may not need to be updated correspondingly.

It can be learned from the foregoing method that an upper-layer component may not need to sense a change in an actual storage address of a to-be-called system function. The system isolation layer may isolate a dependency of the component on the actual storage address of the system function. When the actual storage address of the system function changes due to an update of an operating system, because a fixed address of a system isolation layer used to encapsulate the system function remains unchanged, the component may not need to be recompiled or relinked. An executable file of the component can still run in an updated operating system. In addition, a system application may not need to sense a change in an actual storage address of a to-be-called third-party function. The component isolation layer may isolate a dependency of the system application on the actual storage address of the third-party function. When the actual storage address of the third-party function changes due to an update of the third-party function, because a fixed address of a component isolation layer used to encapsulate the third-party function remains unchanged, the system application and the operating system may not need to be recompiled or relinked. The third-party function can still be correctly found and called without updating the system application or the operating system along with the third-party function. In the foregoing method in which the binary difference isolation layer is introduced, a component can be decoupled from an operating system, and both the component and the operating system may be independently updated.

The following describes a structure of an electronic device 100 in this application.

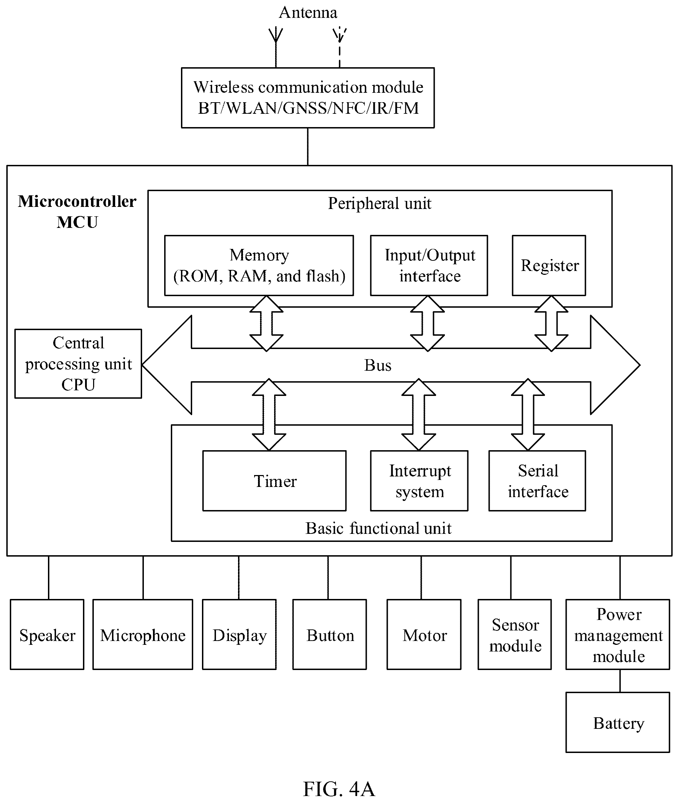

**FIG. 4A** **is a diagram of an example hardware structure of the electronic device 100.**

As shown in FIG. 4A, the electronic device 100 may include an MCU, an antenna, a wireless communication module, a speaker, a microphone, a display, a button, a motor, a sensor module, a power management module, a battery, and the like.

It can be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or the components may be arranged differently. The components shown in the figure may be implemented by using hardware, software, or a combination of software and hardware.

A central processing unit CPU, a peripheral unit, and a basic functional unit may be integrated in the MCU. The peripheral unit may include a memory (for example, a ROM, a RAM, or a flash), an input/output interface, and a register. The basic functional unit may include a timer/timing device, an interrupt system, and a serial interface. The MCU may be configured to implement the following functions: timing, serving as an input/output interface to connect to an external channel, implementing external interrupt control, providing a communication interface, and the like. The CPU, the components in the peripheral unit, and the components in the basic functional unit may be coupled through a bus.

The memory may be configured to store a computer program and data. For example, the memory may store a binary difference isolation layer, a program corresponding to an operating system, and an executable file of a component. The memory may include a ROM, a RAM, and a flash. Both the ROM and the RAM support on-chip instruction fetching. The CPU may randomly access content in the ROM and the RAM. In some embodiments, a storage area in the ROM may be divided into areas. Different storage areas in the ROM may be independently updated. For example, the storage area in the ROM may include a storage area 1 and a storage area 2. The storage area 1 and the storage area 2 occupy different storage addresses. The storage area 1 and the storage area 2 may be respectively used to store different content. When content in the storage area 1 needs to be updated, the electronic device 100 may re-burn the entire storage area 1, and store updated content in the storage area 1. In this case, the electronic device 100 may keep content in the storage area 2 unchanged, in other words, not burn the storage area 2. The flash does not support random access from the CPU. No data loss occurs in the flash upon a power failure. The electronic device 100 may read content stored in the flash to the RAM. Then the CPU may access related content from the RAM. The content stored in the flash is read to the RAM, and a storage location in the RAM may be predetermined in a compilation and linking stage of the content. Data loss occurs in the RAM upon a power failure. Therefore, when the RAM is powered off (for example, the electronic device 100 is powered off, or the electronic device 100 runs out of power) and then powered on (for example, the electronic device 100 is powered on), data that is previously stored in the RAM and that is read from the flash is lost. After the RAM is powered on, the electronic device 100 may read the data in the flash to the RAM again.

In some embodiments, the electronic device 100 may store a system application together with the operating system in the ROM. The system application and the operating system may be coupled and stored in a storage area in the ROM together. To be specific, the system application and the operating system are always updated together. Alternatively, the system application and the operating system are separately stored in different storage areas in the ROM, and the system application and the operating system may be independently updated. The electronic device 100 may store a third-party component in the flash. The electronic device 100 may read an executable file of the third-party component from the flash to the RAM, and then execute the executable file.

In some other embodiments, the electronic device 100 may alternatively store a third-party component in the ROM. A storage area of the third-party component in the ROM is different from storage areas of a system application and an operating system in the ROM. In this way, the third-party component can be updated independently of the system application and the operating system.

In some other embodiments, the electronic device 100 may alternatively store a system application in the flash. The electronic device 100 may read an executable file of the system application from the flash to the RAM, and then execute the executable file.

A type of the memory is not limited in this embodiment of this application. For example, in addition to the ROM, the RAM, and the flash, a pseudo static random access memory (pseudo static random access memory, PSRAM) may be further integrated in the MCU.

The CPU may include components like a controller and an arithmetic unit. The CPU may be configured to read a binary instruction from the ROM or the RAM, and execute the binary instruction. In other words, the MCU may implement on-chip instruction fetching and execute an instruction. For example, the CPU may read an executable file of a component from the ROM or the RAM, and execute a binary instruction in the executable file, to implement a function corresponding to the component.

The input/output interface may include a USB interface. In addition to the USB interface, the input/output interface integrated in the MCU may further include one or more of the following: an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, and the like.

The register may be configured to temporarily store data participating in an operation and an operation structure.

The timer/timing device may be configured to measure time at which an event occurs or measure a time difference between two events.

The interrupt system may be configured to implement real-time control, automatic failure handling, and data transmission between the CPU and a peripheral device.

The serial interface may be an extended interface in a serial communication mode, and may be configured to implement bit-by-bit sequential transmission of data.

The speaker, also referred to as a "loudspeaker", is configured to convert an audio electrical signal into a sound signal.

The microphone, also referred to as a "mike" or a "mic", is configured to convert a sound signal into an electrical signal.

The display is configured to display an image, a video, or the like. In some embodiments, the electronic device 100 may include one or N displays, where N is a positive integer greater than 1.

The button includes a power button, a volume button, and the like.

The motor may generate a vibration prompt.

The sensor module may include one or more of the following sensors: a pressure sensor, a gyroscope sensor, a barometric pressure sensor, a magnetic sensor, an acceleration sensor, a gravity sensor, a distance sensor, an optical proximity sensor, a fingerprint sensor, a temperature sensor, a touch sensor, an ambient light sensor, a bone conduction sensor, and the like.

The power management module is configured to connect the battery to the MCU. The power management module may receive a charging input from a charger, to charge the battery and supply power to the MCU, the speaker, the microphone, the display, the sensor module, the wireless communication module, and the like. The power management module may further receive an input from the battery, to supply power to the MCU, the speaker, the microphone, the display, the sensor module, the wireless communication module, and the like.

A wireless communication function of the electronic device 100 may be implemented by the antenna, the wireless communication module, and the like.

The antenna is configured to transmit and receive an electromagnetic wave signal. Each antenna in the electronic device may be configured to cover one or more communication frequency bands. Different antennas may be further reused to improve antenna utilization. For example, an antenna 1 may be reused as a diversity antenna of a wireless local area network. In some other embodiments, the antenna may be used in combination with a tuning switch.

The wireless communication module may provide a solution applied to the electronic device 100 for wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module may be one or more components that integrate at least one communication processor module. The wireless communication module receives an electromagnetic wave through the antenna, performs frequency modulation and filtering on an electromagnetic wave signal, and sends a processed signal to the MCU. The wireless communication module may further receive a to-be-sent signal from the MCU, perform frequency modulation and amplification on the signal, and convert a processed signal into an electromagnetic wave for radiation through the antenna. In some embodiments, the wireless communication module may further provide a solution for wireless communication like 2G/3G/4G/5G.

A software system of the electronic device 100 may use a hierarchical architecture, an event-driven architecture, a microkernel architecture, a microservice architecture, or a cloud architecture. In embodiments of this application, the hierarchical architecture is used as an example to describe a software structure of the electronic device 100.

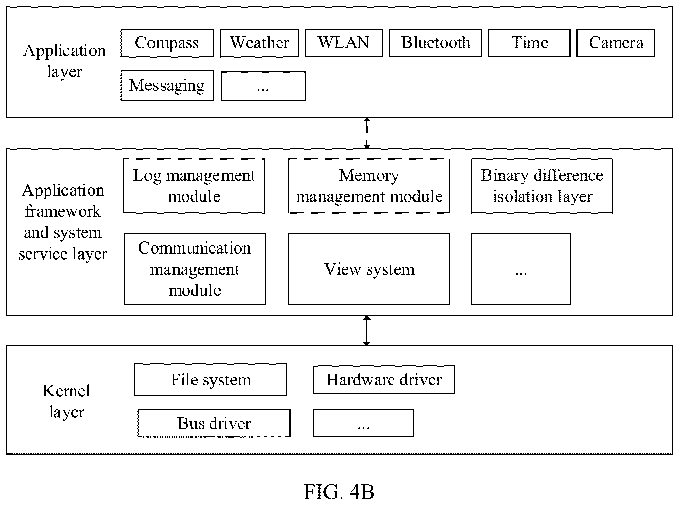

**FIG. 4B** **is a block diagram of the software structure of the electronic device 100 according to an embodiment of this application.**

In the hierarchical architecture, software is divided into several layers, and each layer has a clear role and task. The layers communicate with each other through a software interface. In some embodiments, the software system of the electronic device 100 may be divided into three layers: an application layer, an application framework and system service layer, and a kernel layer from top to bottom.

The application layer may include a series of application packages. The application package may also be referred to as a component package.

As shown in FIG. 4B, the application package may include a third-party component and a system application, for example, Compass, Weather, WLAN, Bluetooth, Time, Camera, and Messaging.

The application framework and system service layer provides an API and a programming framework for an application at the application layer. The application framework layer includes some predefined functions.

As shown in FIG. 4B, the application framework and system service layer may include a log management module, a communication management module, a view system, a memory management module, and the like.

The log management module may be configured to provide log recording and log maintenance.

The communication management module may be configured to centrally manage semaphores and message handles.

The view system includes visual controls, such as a control for displaying text and a control for displaying a picture. The view system may be configured to construct an application. A display interface may include one or more views. For example, a display interface including an SMS message notification icon may include a text display view and a picture display view.

The memory management module may be configured to manage a memory. For example, the electronic device 100 may manage different storage areas in a ROM through the memory management module.

In some embodiments, the application framework and system service layer may further include a binary difference isolation layer. The binary difference isolation layer may include a component isolation layer and a system isolation layer. The component isolation layer may be an interface for calling a third-party function. The system isolation layer may be an interface for calling a system function. That is, both the component isolation layer and the system isolation layer are interface functions. For details about the binary difference isolation layer, refer to the descriptions in the foregoing embodiments.

The kernel layer is a layer between hardware and software. The kernel layer includes at least a file system, a hardware driver, and a bus driver.

The file system may be configured to manage files and data stored on the electronic device 100, and may be equivalent to a file resource manager. The file system may be a method for organizing files on the electronic device. The file system may be divided into a plurality of subdirectories downward in a hierarchical structure by starting from a root directory. The file system may be responsible for the following functions: creating a file, writing data into a file, reading data from a file, modifying a file, dumping a file, and the like. For example, the file system may store a file at a storage location corresponding to a file path. In this way, a user can find the corresponding file through the file path.

The hardware driver may be used by software (for example, content of the application layer or content of the application framework layer and the system service layer) of the electronic device 100 to drive hardware of the electronic device 100 to operate. For example, the hardware of the electronic device 100 may include one or more of the following: a display, a camera, a speaker, a microphone, a sensor, and the like. In this case, the hardware driver may include one or more of the following: a display driver, a camera driver, an audio driver, a sensor driver, and the like.

The bus driver may be configured to control a bus component to implement a corresponding function, and is a bus controller, adapter, and bridge.

In some embodiments, the software system of the electronic device 100 may further include a static library, to enable a component implemented based on a static link on the electronic device 100 to call a needed system function during running. A location of the static library in the software system is not limited in this embodiment of this application. For example, the static library may be located at the application framework and system service layer, or located at another layer between the application framework and system service layer and the kernel layer.

In some embodiments, after the software system of the electronic device 100 is constructed, the software system may be packaged into a system image from top to bottom. The system image may be a binary file. Content in the system image may be segmented according to a preset rule. For example, in the system image, a part supporting post-loading (for example, the file system or a third-party component) may be separated from a part not supporting post-loading (for example, an operating system). The part supporting post-loading may be placed in a flash of the electronic device 100. The part not supporting post-loading may be burnt into a ROM of the electronic device 100. Therefore, the electronic device 100 may burn the operating system in the ROM, and store the file system and the third-party component in the flash. The file system may manage a storage location of the third-party component in the flash. An executable file of the third-party component in the flash may be stored and indexed based on a file path. After being powered on, the electronic device 100 may first execute an instruction in the ROM, and then read content (for example, the executable file of the third-party component) in the flash to a preset storage area in a RAM.

A type of the operating system of the electronic device 100 is not limited in this embodiment of this application. For example, the operating system may be Android^{®}, Symbian^{®} (Symbian^{®}), Microsoft^{®} Windows^{®}, Apple iOS^{®}, Blackberry^{®} (Blackberry^{®}), or Harmony^{®} (Harmony^{®}) OS.

The following describes the static linking method provided in this application with reference to some publishing and update statuses of a component and an operating system.

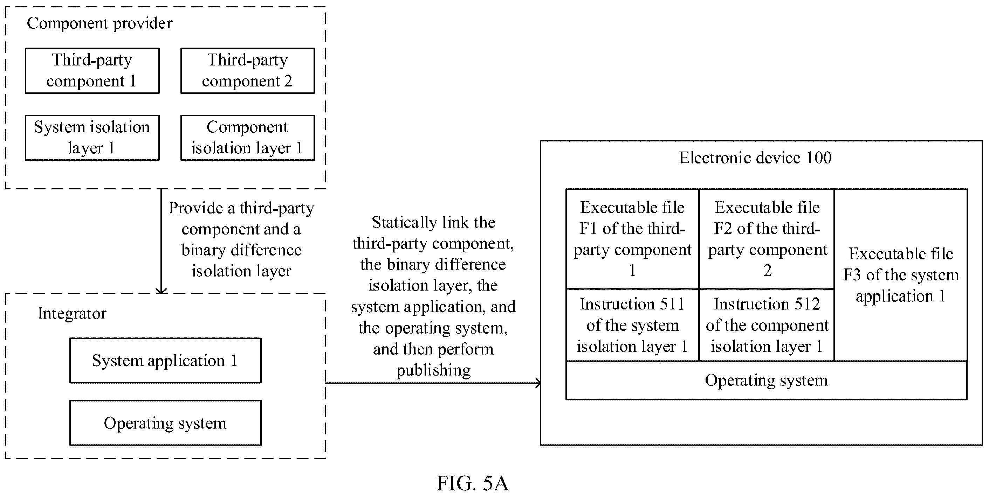

**Case 1 (****FIG. 5A to FIG. 5C****): A component provider provides a third-party component before an electronic device 100 is delivered.**

In some embodiments, a component provider may develop a component and a binary difference isolation layer. The component provider may include a device, for example, a PC or a server, for developing the component and the binary difference isolation layer. An integrator may develop an operating system, to load the operating system to an electronic device 100 manufactured by the integrator. The integrator may also be referred to as a device manufacturer or the like. The integrator may include a device, for example, a PC or a server, for developing the operating system, and a device for loading the operating system to the electronic device 100.

The component provider may be different from the integrator. To be specific, the component provider may not be a manufacturer of the electronic device 100, and has a requirement for publishing, on the electronic device 100, a component developed by the component provider. When the component provider is different from the integrator, a component provided by the component provider may be a third-party component. The integrator may integrate, in the operating system, third-party components provided by a plurality of component providers, and publish the third-party components on the electronic device 100. Alternatively, the component provider and the integrator may be a same party. To be specific, the component provider may be a manufacturer of the electronic device 100. For example, in addition to the operating system, the integrator may further develop one or more components to be published on the electronic device 100. When the component provider and the integrator are a same party, a component provided by the component provider may be a system component (namely, a system application).

Herein, an example in which the component provider is different from the integrator and the component provider provides a third-party component is specifically used for description.

In some embodiments, the component provider and the integrator may determine, through pre-communication, a fixed address, in a memory of the electronic device 100, that is used to encapsulate a utility function (including a system function and a third-party function). To be specific, a part of storage areas may be preset in the memory of the electronic device 100 to store a component isolation layer and a system isolation layer, to fix an address of an interface function. The interface function is the system isolation layer and the component isolation layer, and may be used to call the system function and the third-party function. The preset storage area corresponding to the fixed address may be an independent storage area not affected by a change in stored content in another storage area on the electronic device 100. The preset storage area corresponding to the fixed address may include two independent storage areas that are respectively used for the storage system isolation layer and the component isolation layer. Therefore, the system isolation layer and the component isolation layer may be separately updated without mutual interference. The preset storage area corresponding to the fixed address may be a storage area in a ROM of the electronic device 100. An independent storage area in the ROM may be an area with consecutive storage addresses in the ROM. When content in an independent storage area in the ROM is updated, the independent storage area may be entirely re-burnt, to write updated content into the independent storage area.

Herein, the following scenario is used as an example for description: The component provider develops a third-party component 1 and a third-party component 2, the integrator provides a system application 1, the third-party component 1 needs to call a system function 1 provided by the operating system, and the system application needs to call the third-party component 2, where the third-party component may be a third-party function.

It can be understood that one third-party component may call one or more system functions, and one system application may also call one or more third-party components. In addition to the system function 1, the third-party component 1 may further call more system functions. For a method for calling another system function by the third-party component 1, refer to descriptions of a method for calling the system function 1 by the third-party component 1. In addition to the third-party component 2, the system application 1 may further call more third-party components. For a method for calling another third-party component by the system application 1, refer to descriptions of a method for calling the third-party component 2 by the system application 1.

As shown in FIG. 5A, the component provider may develop the third-party component 1 and the third-party component 2, and develop a binary difference isolation layer based on a fixed address agreed-upon with the integrator. The binary difference isolation layer may include a system isolation layer 1 and a component isolation layer 1. The system isolation layer 1 may be configured to encapsulate the system function 1, to enable a component like the third-party component 1 to call the system function 1. The component isolation layer 1 may be configured to encapsulate the third-party component 2, to enable a component like the system application 1 to call the third-party component 2.

The fixed address may include a fixed address used to encapsulate the system function 1 (in other words, a fixed address used to store the system isolation layer 1) and a fixed address used to encapsulate the third-party component 2 (in other words, a fixed address used to store the component isolation layer 1). In this way, during static linking of the third-party component 1, a linker may statically link the component 1 by using the fixed address used to store the system isolation layer 1, to isolate a dependency of the third-party component 1 on an actual storage address of the system function 1.

The binary difference isolation layer is not limited to the fixed address used to encapsulate the system function 1 and the fixed address used to encapsulate the third-party component 2, and may be further configured to encapsulate another utility function (for example, a system function or a third-party function), so that a component can be statically linked based on a fixed address used to encapsulate a utility function needed by the component. In other words, in addition to the system isolation layer 1 and the component isolation layer 1, the binary difference isolation layer may further include more system isolation layers used to encapsulate other system functions and more component isolation layers used to encapsulate other third-party components. The binary difference isolation layer may isolate a dependency of one or more components on an actual storage address of a utility function needed by the component.

It can be understood that different component providers may separately pre-communicate with the integrator to determine, in the memory of the electronic device 100, a fixed address used to encapsulate a system function and a fixed address used to encapsulate a third-party component. To be specific, different component providers may respectively provide corresponding system isolation layers for third-party components developed by the component providers, and provide component isolation layers used to encapsulate third-party components developed by the component providers.

Optionally, the binary difference isolation layer may alternatively be provided by the integrator. This is not limited in this embodiment of this application.

Before the electronic device 100 is delivered (in other words, during development of the electronic device 100), the component provider may provide the third-party component 1, the third-party component 2, the system isolation layer 1, and the component isolation layer 1 for the integrator. When receiving the foregoing content provided by the component provider, the integrator may statically link a third-party component (including the third-party component 1 and the third-party component 2), a binary difference isolation layer (including the system isolation layer 1 and the component isolation layer 1), a system application (for example, the system application 1), and an operating system, and then publish content obtained through the static linking to the electronic device 100. To be specific, upon delivery, the electronic device 100 may include the operating system, an instruction 511 of the system isolation layer 1, an instruction 512 of the component isolation layer 1, an executable file F1 of the third-party component 1, an executable file F2 of the third-party component 2, and an executable file F3 of the system application.

The instruction 511 of the system isolation layer 1 may be a binary instruction obtained by compiling and linking a source program of the system isolation layer 1.

The instruction 512 of the component isolation layer 1 may be a binary instruction obtained by compiling and linking a source program of the component isolation layer 1.

Statically linking the third-party component 1 may include: statically linking a target file of the third-party component 1 and the system function 1 into the executable file F1 based on a fixed address used to encapsulate the system function 1. The executable file F1 may include the fixed address used to encapsulate the system function 1. The instruction 511 of the system isolation layer 1 may be stored in a storage area corresponding to the fixed address used to encapsulate the system function 1. In this way, when the electronic device 100 executes the executable file F1, the electronic device 100 may call the system isolation layer 1 based on the fixed address used to encapsulate the system function 1, to call the system function 1 by using the system isolation layer 1.

Statically linking the system isolation layer 1 and the operating system may include: providing the actual storage address of the system function 1 for the system isolation layer 1. When the system isolation layer 1 is statically linked and then published to the electronic device 100, the electronic device 100 may store, based on the fixed address used to encapsulate the system function 1, the instruction 511 of the system isolation layer 1 in the storage area corresponding to the fixed address in the memory. When the operating system is statically linked and then published to the electronic device 100, the electronic device 100 may store the operating system in the memory. The electronic device 100 may store, in a corresponding storage area based on an actual storage address of each system function, an instruction corresponding to the system function. For example, the electronic device 100 may store an instruction of the system function 1 in a storage area corresponding to the actual storage address of the system function 1.

The system application 1 may be compiled and linked together with the operating system. Statically linking the system application 1 may include: statically linking a target file of the system application 1 and the third-party component 2 into the executable file F3 based on the fixed address used to encapsulate the third-party component 2. The executable file F3 may include the fixed address used to encapsulate the third-party component 2. The instruction 512 of the component isolation layer 1 may be stored in a storage area corresponding to the fixed address used to encapsulate the third-party component 2. In this way, when the electronic device 100 executes the executable file F3, the electronic device 100 may call the component isolation layer 1 based on the fixed address used to encapsulate the third-party component 2, to call the third-party component 2 by using the component isolation layer 1.

Statically linking the third-party component 2 and the component isolation layer 1 may include: statically linking a target file of the third-party component 2 into the executable file F2, determining an actual storage address of the executable file F2, and providing the actual storage address of the executable file F2 for the component isolation layer 1. When the component isolation layer 1 is statically linked and then published to the electronic device 100, the electronic device 100 may store, based on the fixed address used to encapsulate the third-party component 2, the instruction 512 of the component isolation layer 1 in the storage area corresponding to the fixed address in the memory. When the third-party component 2 is statically linked and then published to the electronic device 100, the electronic device 100 may store the executable file F2 in a storage area corresponding to the actual storage address of the executable file F2.

In a possible implementation, the third-party component 1 provided by the component provider for the integrator may be a target file obtained by compiling a source file of the third-party component 1. The third-party component 2 provided by the component provider for the integrator may be a target file obtained by compiling a source file of the third-party component 2. The binary difference isolation layer provided by the component provider for the integrator may also be a target file obtained by compiling the binary difference isolation layer. That is, the component provider may compile the third-party component 1, the third-party component 2, and the binary difference isolation layer, and then provide compiled content for the integrator.

The integrator may compile the system application like the system application 1 and the operating system, and statically link a compiled system application like a compiled system application 1 and a compiled operating system together with the target file of the third-party component and the target file of the binary difference isolation layer that are from the component provider.

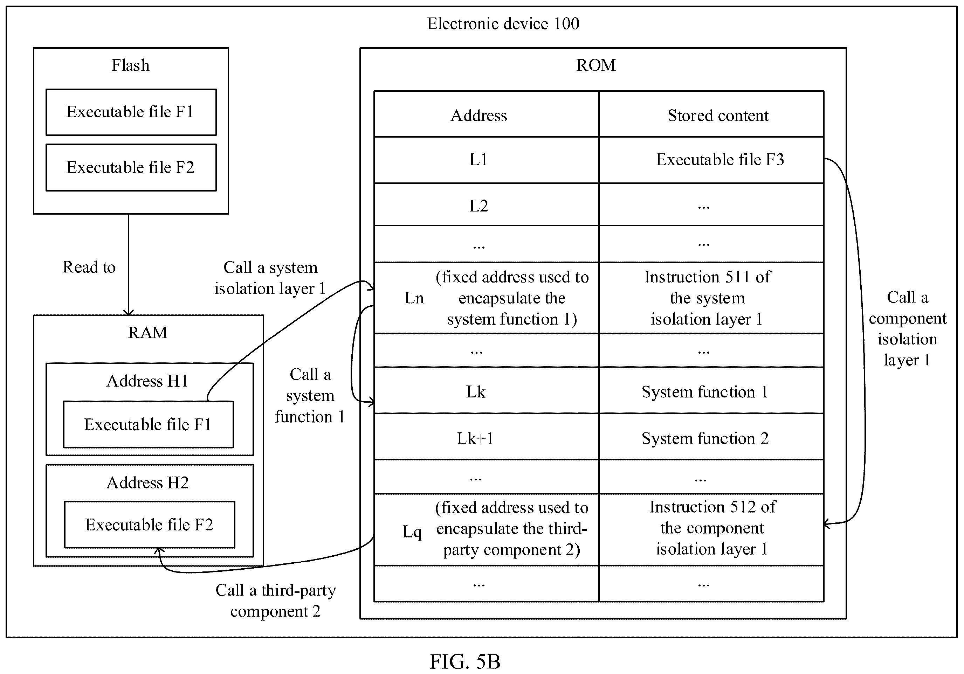

**FIG. 5B** **is an example diagram of storage locations of a third-party component, a binary difference isolation layer, a system application, and an operating system on an electronic device 100.**

As shown in FIG. 5B, a memory of the electronic device 100 may include a ROM, a RAM, and a flash. An executable file F1 of a third-party component 1 and an executable file F2 of a third-party component 2 may be stored in the flash. An executable file F3 of the system application, the operating system, an instruction 511 of a system isolation layer 1, and an instruction 512 of a component isolation layer 1 may be stored in the ROM.

After the RAM is powered on (for example, after the electronic device 100 is powered on), the electronic device 100 may read the executable file F1 and the executable file F2 from the flash to the RAM. The electronic device 100 may store the executable file F1 in a storage area corresponding to an address H1 in the RAM, and store the executable file F2 in a storage area corresponding to an address H2 in the RAM. The address H1 and the address H2 may be determined in a compilation and linking stage of the third-party component 1 and the third-party component 2. When the third-party component 1 needs to be run, the electronic device 100 may obtain the executable file F1 from the storage area corresponding to the address H1 in the RAM, and execute the executable file F1. The address H1 may be referred to as an execution address of the third-party component 1. Similarly, when the third-party component 2 needs to be run, the electronic device 100 may obtain the executable file F2 from the storage area corresponding to the address H2 in the RAM, and execute the executable file F2. The address H2 may be referred to as an execution address of the third-party component 2. The address H1 and the address H2 are merely examples for description of this application, and should not constitute a limitation on this application.

In the ROM, the executable file F3 of the system application 1 may be stored in a storage area with an address of L1, the instruction 511 of the system isolation layer 1 may be stored in a storage area with an address of Ln, a system function 1 may be stored in a storage area with an address of Lk, a system function 2 may be stored in a storage area with an address of Lk+1, and the instruction 512 of the component isolation layer 1 may be stored in a storage area with an address of Lq.

The address Ln in the ROM may be a fixed address used to encapsulate the system function 1. The third-party component 1 may be statically linked based on the address Ln. Therefore, the executable file F1 of the third-party component 1 may include the address Ln. When the third-party component 1 is run, the electronic device 100 may fetch an on-chip instruction from the RAM, to obtain the executable file F1. The electronic device 100 executes the executable file F1, and may read the instruction 511 of the system isolation layer 1 from the ROM based on the address Ln in the executable file F1, and call the system isolation layer 1. Because the system isolation layer 1 may obtain an actual storage address (that is, the address Lk) of the system function 1 during static linking, the electronic device 100 may call the system function 1 by executing the instruction 511 of the system isolation layer 1. In this way, during running, the third-party component 1 may call the system function 1 by using the system isolation layer 1 based on the fixed address used to encapsulate the system function 1.

The address Lq in the ROM may be a fixed address used to encapsulate the third-party component 2. The system application 1 may be statically linked based on the address Lq. Therefore, the executable file F3 of the system application 1 may include the address Lq. When the system application 1 is run, the electronic device 100 may fetch an on-chip instruction from the ROM, to obtain the executable file F3. The electronic device 100 executes the executable file F3, and may read the instruction 512 of the component isolation layer 1 from the ROM based on the address Lq in the executable file F3, to call the component isolation layer 1. Because the component isolation layer 1 may obtain an actual storage address (that is, the address H2) of the third-party component 2 during static linking, the electronic device 100 may call the third-party component 2 by executing the instruction 512 of the component isolation layer 1. In this way, during running, the system application 1 may call the third-party component 2 by using the component isolation layer 1 based on the fixed address used to encapsulate the third-party component 2.

In some embodiments, a storage area to which the address Lk and the address Lk+1 belong may be an area, in the ROM, in which the operating system is stored. The operating system, the system application, and the system isolation layer may be stored in an independent area in the ROM together, for example, a storage area A1. To be specific, the operating system, the system application, and the system isolation layer are always updated together. When any one or more of the operating system, the system application, and the system isolation layer needs to be updated, the electronic device 100 may re-burn the entire storage area A1, to write an updated operating system, an updated system application, and an updated system isolation layer into the storage area A1. The system isolation layer is stored in a storage area corresponding to a fixed address in the storage area A1. All of the address L1, the address Ln, the address Lk, and the address Lk+1 shown in FIG. 5B may be addresses in the storage area A1. In some other embodiments, the operating system and the system application may be separately stored in different independent areas in the ROM. For example, the operating system may be stored in a storage area A2 in the ROM, and the system application may be stored in a storage area A3 in the ROM. When the operating system in the storage area A2 is updated, the storage area A3 may remain unchanged (to be specific, the system application may not need to be updated). When the system application in the storage area A3 is updated, the storage area A2 may remain unchanged (to be specific, the operating system may not need to be updated). In some other embodiments, the system isolation layer and the operating system may alternatively be separately stored in different independent areas in the ROM.

A storage area of a component isolation layer (for example, the component isolation layer 1) in the ROM may be an independent area different from storage areas of the operating system, the system application, and the system isolation layer. To be specific, when one or more of the operating system, the system application, and the system isolation layer is updated, the component isolation layer stored in the ROM may remain unchanged, without re-burning.

The address Ln and the address Lq are preset fixed addresses. All of the addresses L1, Ln, and Lk and the address Lq are physical addresses in the ROM. The storage address division and the stored content in the ROM shown in FIG. 5B are merely examples for description of this application, and should not constitute a limitation on this application.

It can be understood that the content, such as the system application like the system application 1, the binary difference isolation layer, and the operating system, is not limited to being stored in the ROM, and may alternatively be stored in another memory that supports on-chip instruction fetching.

In some embodiments, one or more components pre-installed on the electronic device 100 before delivery may be removed.

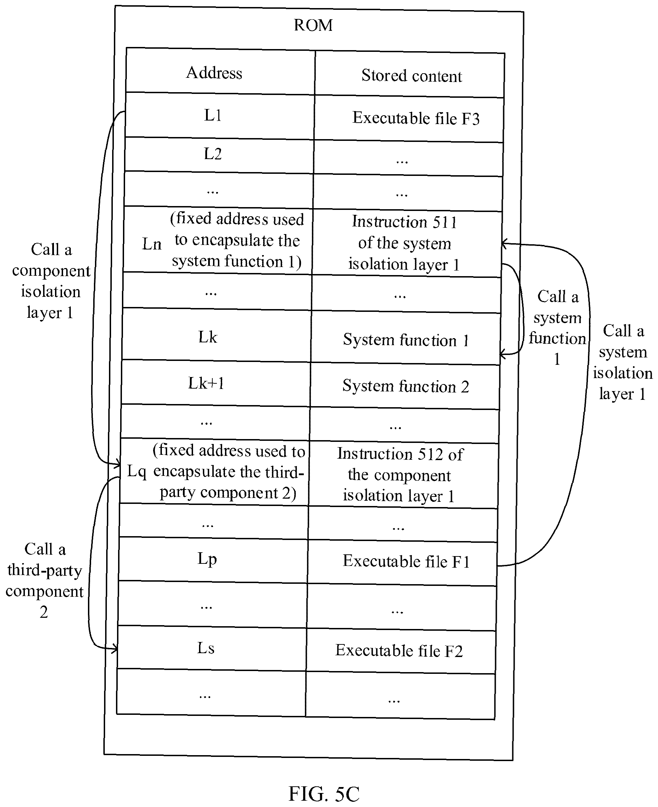

**FIG. 5C** **is another example diagram of storage locations of a third-party component, a binary difference isolation layer, a system application, and an operating system on an electronic device 100.**

As shown in FIG. 5C, all of the third-party component, the binary difference isolation layer, the system application, and the operating system may be stored in a ROM of the electronic device 100. For storage locations of an executable file F3 of a system application 1, an instruction 511 of a system isolation layer 1, a system function 1, and a system function 2 in the ROM, refer to the descriptions of FIG. 5B.

In the ROM, an executable file F1 of a third-party component 1 may be stored in a storage area with an address of Lp, and an executable file F2 of a third-party component 2 may be stored in a storage area with an address of Ls.

When the third-party component 1 is run, the electronic device 100 may fetch an on-chip instruction from the ROM, to obtain the executable file F1. It can be learned from the foregoing embodiments that the executable file F1 may include a fixed address Ln used to encapsulate the system function 1. The electronic device 100 executes the executable file F1, and may call the system function 1 by using the system isolation layer 1 based on the address Ln in the executable file F1.

When the system application 1 is run, the electronic device 100 may fetch an on-chip instruction from the ROM, to obtain and execute the executable file F3. It can be learned from the foregoing embodiments that the executable file F3 may include a fixed address Lq used to encapsulate the third-party component 2. An instruction 512 of a component isolation layer 1 may be stored at the address Lq. Because the component isolation layer 1 may obtain an actual storage address (that is, the address Ls) of the third-party component 2 during static linking, the electronic device 100 may call the third-party component 2 by using the component isolation layer 1 based on the address Lq in the executable file F3.

It should be noted that a storage area of the third-party component in the ROM may be an independent area different from storage areas of the operating system, the system application, and the binary difference isolation layer. To be specific, when one or more of the operating system, the system application, and the binary difference isolation layer is updated, the third-party component stored in the ROM may remain unchanged, without re-burning. Optionally, the third-party component and the component isolation layer may be stored in an independent area in the ROM together. To be specific, the third-party component and the component isolation layer are always updated together.

Area division of storage areas in the ROM is not limited in this embodiment of this application.

In some embodiments, a component provider may alternatively provide a new third-party component for an integrator after an electronic device 100 is delivered. A binary difference isolation layer that has been provided by the component provider for the integrator includes a system isolation layer used to encapsulate a system function needed by the new third-party component. When receiving the new third-party component provided by the component provider, the integrator may link the new third-party component based on a fixed address used to encapsulate the system function, and then publish the new third-party component to the electronic device 100. The electronic device 100 may install the new third-party component, store an executable file of the new third-party component in a flash, and read the executable file from the flash to a RAM. Alternatively, the electronic device 100 may directly store an executable file of the new third-party component in a memory (for example, a ROM) that supports on-chip instruction fetching. Optionally, the electronic device 100 may include an application, for example, an application market, that is used to install a component or an APP. A user may find the new third-party component in the application market on the electronic device 100. In response to a user operation of installing the new third-party component, the electronic device 100 may obtain the executable file of the new third-party component, and store the executable file of the new third-party component.

In some embodiments, a system application (for example, the system application 1) may also call a system function through a system isolation layer (for example, the system isolation layer 1) during running. For details, refer to the method for calling a system function by the third-party component 1 by using the system isolation layer 1. To be specific, the system application may alternatively be decoupled from an operating system, and the system application and the operating system are independently updated without affecting each other.

To be specific, both a third-party component installed on the electronic device 100 before delivery and a third-party component installed upon triggering by a user after delivery may be components published after being statically linked based on fixed addresses used to encapsulate system functions needed by the third-party components. A system isolation layer encapsulates a system function needed by a third-party component, to isolate a dependency of the third-party component on an actual storage address of the system function. A component isolation layer encapsulates a third-party component needed by a system application, to isolate a dependency of the system application on an actual storage address of the third-party component. In this way, both a component and an operating system may be independently updated without affecting each other.

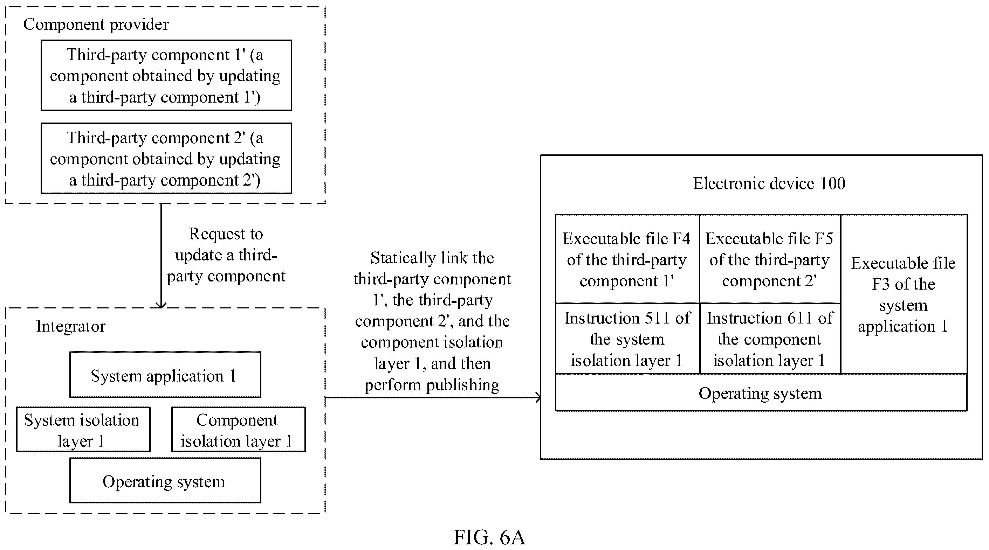

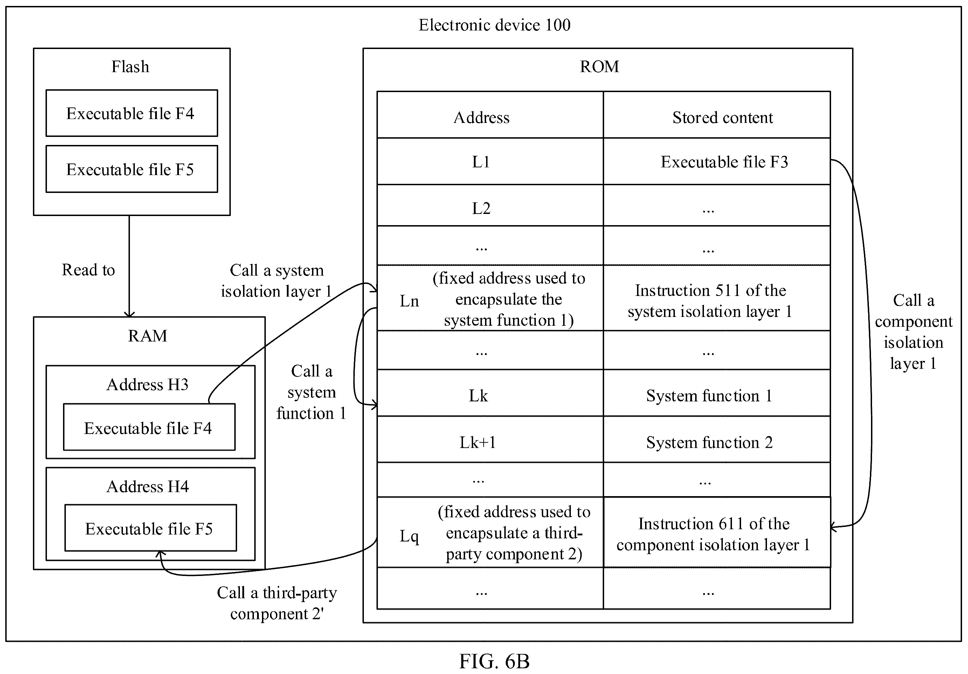

**Case 2 (****FIG. 6A** **and** **FIG. 6B****): A third-party component is updated after an electronic device 100 is delivered.**

For a component provider and an integrator, refer to the descriptions in the case 1. It should be noted that, because the component provider has provided a binary difference isolation layer (for example, the system isolation layer 1 and the component isolation layer 1), the integrator may have the binary difference isolation layer. When updating a component, the component provider may only need to provide an updated third-party component.

Herein, an example in which the component provider updates a third-party component 1 and a third-party component 2 is used for description.

As shown in FIG. 6A, the component provider may update the third-party component 1 and the third-party component 2. A component obtained by updating the third-party component 1 may be a third-party component 1'. A component obtained by updating the third-party component 2 may be a third-party component 2'. The component provider may request the integrator to update the third-party components (including the third-party component 1 and the third-party component 2), and provide the third-party components 1' and the third-party components 2' for the integrator. For example, the component provider may provide, for the integrator, target files obtained by compiling source files of the third-party component 1' and the third-party component 2'. When receiving a target file of the third-party component 1' and a target file of the third-party component 2', the integrator may statically link the third-party component 1', the third-party component 2', and the component isolation layer 1 into executable files, and then publish the executable files to the electronic device 100. The electronic device 100 may update the third-party component 1, the third-party component 2, and the component isolation layer 1, and store an executable file F4 of the third-party component 1', an executable file F5 of the third-party component 2', and an instruction 611 of the component isolation layer 1. In a scenario in which the third-party component 1 and the third-party component 2 are updated, a system application like a system application 1, the system isolation layer 1, and an operating system may remain unchanged. The electronic device 100 may still store an instruction of the system isolation layer 1, the operating system, and an executable file F3 of the system application 1.

It can be learned from FIG. 5A and FIG. 6A that, when the third-party component 2 is updated, an instruction obtained by statically linking the component isolation layer 1 used to encapsulate the third-party component 2 is updated correspondingly. To be specific, the instruction 512 shown in FIG. 5A is updated to the instruction 611 shown in FIG. 6A. The instruction 512 may be different from the instruction 611.

Herein, a reason why the instruction obtained by statically linking the component isolation layer 1 is updated along with the update of the third-party component 2 is described.

When the third-party component 2 is updated to the third-party component 2', statically linking the third-party component 2 and the component isolation layer 1 may include: statically linking a target file of the third-party component 2' into the executable file F5, determining an actual storage address of the executable file F5, and providing the actual storage address of the executable file F5 for the component isolation layer 1. The actual storage address of the executable file F5 may be different from an actual storage address, used before the update, of an executable file F2 of the third-party component 2, and the component isolation layer 1 needs to obtain an actual storage address of the third-party component 2 (or the third-party component 2') to index and call the third-party component 2 (or the third-party component 2'). Therefore, the instruction obtained by statically linking the component isolation layer 1 needs to be updated along with the update of the third-party component 2.

Before the third-party component 2 is updated, the instruction 512 of the component isolation layer 1 shown in FIG. 5A may be used to find the third-party component 2 based on the actual storage address of the third-party component 2 and call the third-party component 2. After the third-party component 2 is updated, the instruction 611 of the component isolation layer 1 shown in FIG. 6A may be used to find the third-party component 2' based on the actual storage address of the third-party component 2' and call the third-party component 2'.

When the component isolation layer 1 is statically linked and then published to the electronic device 100, the electronic device 100 may store, based on a fixed address used to encapsulate the third-party component 2, the instruction 611 of the component isolation layer 1 in a storage area corresponding to the fixed address in a memory. When the third-party component 2' is statically linked and then published to the electronic device 100, the electronic device 100 may store the executable file F5 in a storage area corresponding to the actual storage address of the executable file F5.

It can be understood that, when the component isolation layer 1 is statically linked together with the third-party component 2', a source program of the component isolation layer 1 may remain unchanged, and an instruction of the component isolation layer 1 may change after the static linking. That is, when a third-party component is updated, a component provider may not need to provide a binary difference isolation layer again.

In addition, although the instruction obtained by statically linking the component isolation layer 1 is updated along with the update of the third-party component 2, an address at which the instruction of the component isolation layer 1 is stored does not change. That is, the fixed address used to encapsulate the third-party component 2 does not change with the update of the third-party component 2. Therefore, the system application 1 may still find the instruction 611 of the component isolation layer 1 based on the fixed address used to encapsulate the third-party component 2, and call the third-party component 2' by using the component isolation layer 1. The system application 1 may not need to be recompiled or relinked. Because the operating system is not updated, the operating system may not need to be recompiled or relinked either. An actual storage address of a system function in the operating system does not change. Therefore, the system isolation layer 1 does not need to be recompiled or relinked either.

In some embodiments, the third-party component 1' still needs to call a system function 1. When using the target file of the third-party component 1' for static linking, the integrator may statically link the target file of the third-party component 1' into the executable file F4 based on a fixed address used to encapsulate the system function 1. The executable file F4 may include the fixed address used to encapsulate the system function 1. An instruction 511 of the system isolation layer 1 may be stored in a storage area corresponding to the fixed address used to encapsulate the system function 1. In this way, when the electronic device 100 executes the executable file F4, the electronic device 100 may call the system isolation layer 1 based on the fixed address used to encapsulate the system function 1, to call the system function 1 by using the system isolation layer 1.

Optionally, after the third-party component 1 is updated, the third-party component 1' further needs to call a system function 2. The component provider shown in FIG. 5A has provided a system isolation layer used to encapsulate the system function 2. For example, a ROM of the electronic device 100 includes a fixed address used to encapsulate the system function 2, and an instruction obtained by compiling and linking the system isolation layer used to encapsulate the system function 2 may be stored at the fixed address. When using the target file of the third-party component 1' for static linking, the integrator may statically link the target file of the third-party component 1' into an executable file based on the fixed address used to encapsulate the system function 2. The executable file of the third-party component 1' may include the fixed address used to encapsulate the system function 2. In this way, when the electronic device 100 executes the executable file of the third-party component 1', the electronic device 100 may call the system isolation layer based on the fixed address used to encapsulate the system function 2, to call the system function 2 by using the system isolation layer.

A manner of updating the third-party component 1 and the third-party component 2 on the electronic device 100 is not limited in this embodiment of this application. In a possible implementation, after the third-party component 1 is updated, the executable file F4 of the third-party component 1' may overwrite the executable file F1 of the third-party component 1 shown in FIG. 5A, and is stored in the memory of the electronic device 100. In another possible implementation, content that changes after the third-party component 1 is updated may be stored in the memory of the electronic device 100, and content that does not change after the third-party component 1 is updated may remain unchanged in the memory and continue to be stored. For a manner of updating the third-party component 2, refer to the foregoing manner of updating the third-party component 1.

**FIG. 6B** **is an example diagram of storage locations of a third-party component, a binary difference isolation layer, a system application, and an operating system on an electronic device 100.**

As shown in FIG. 6B, a memory of the electronic device 100 may include a ROM, a RAM, and a flash. The electronic device 100 may update a third-party component 1 and a third-party component 2 in the flash, and store an executable file F4 of a third-party component 1' and an executable file F5 of a third-party component 2' in the flash.

After the RAM is powered on, the electronic device 100 may read the executable file F4 and the executable file F5 from the flash to the RAM. The electronic device 100 may store the executable file F4 in a storage area corresponding to an address H3 in the RAM, and store the executable file F5 in a storage area corresponding to an address H4 in the RAM. The address H3 and the address H4 may be determined in a compilation and linking stage of the third-party component 1' and the third-party component 2'. When the third-party component 1' needs to be run, the electronic device 100 may obtain the executable file F4 from the storage area corresponding to the address H3 in the RAM, and execute the executable file F4. The address H3 may be referred to as an execution address of the third-party component 1'. Similarly, when the third-party component 2' needs to be run, the electronic device 100 may obtain the executable file F5 from the storage area corresponding to the address H4 in the RAM, and execute the executable file F5. The address H4 may be referred to as an execution address of the third-party component 2'. The address H3 and the address H4 are merely examples for description of this application, and should not constitute a limitation on this application.

An address Lq in the ROM may be a fixed address used to encapsulate the third-party component 2. When the third-party component 2 is updated to the third-party component 2', the electronic device 100 may update a component isolation layer 1 in a storage area corresponding to the address Lq. The electronic device 100 may update, from the instruction 512 of the component isolation layer 1 shown in FIG. 5B to an instruction 611 of the component isolation layer 1 shown in FIG. 6B, content stored in the storage area corresponding to the address Lq in the ROM. For stored content in other areas in the ROM, refer to the descriptions of FIG. 5B.

During running, a system application 1 may call the component isolation layer 1 by using the instruction 611 of the component isolation layer 1 at the address Lq, and then call the third-party component 2' by using the component isolation layer 1. It can be learned from the foregoing embodiments that an executable file F3 of the system application 1 may include the address Lq. When the system application 1 is run, the electronic device 100 may execute the executable file F3, read the instruction 611 of the component isolation layer 1 based on the address Lq in the executable file F3, and call the component isolation layer 1. Because the component isolation layer 1 may obtain an actual storage address (that is, the address H4) of the third-party component 2' during static linking, the electronic device 100 may call the third-party component 2' by executing the instruction 611 of the component isolation layer 1.

During running, the third-party component 1' may call a system isolation layer 1 by using an instruction 511 of the system isolation layer 1 at an address Ln, and then call a system function 1 by using the system isolation layer 1. It can be learned from the foregoing embodiments that the executable file F4 of the third-party component 1' may include the address Ln. When the third-party component 1' is run, the electronic device 100 may execute the executable file F4, read the instruction 511 of the system isolation layer 1 based on the address Ln in the executable file F4, and call the system isolation layer 1. The electronic device 100 may call the system function 1 by executing the instruction 511 of the system isolation layer 1.

In some embodiments, the third-party component 1' and the third-party component 2' that are obtained through the update may also be stored in the ROM. For details, refer to the foregoing descriptions of FIG. 5C. Details are not described herein again.

It can be learned that, when a third-party component is updated, a system application and an operating system may not need to be updated correspondingly. To enable the system application to still call an updated third-party component without being updated, the electronic device 100 may update a component isolation layer at a fixed address used to encapsulate the third-party component. The system application may find an updated component isolation layer based on the fixed address, to call the updated third-party component by using the component isolation layer. In the foregoing method, costs of updating the third-party component can be effectively reduced, and efficiency of updating the third-party component by the electronic device 100 can be improved.

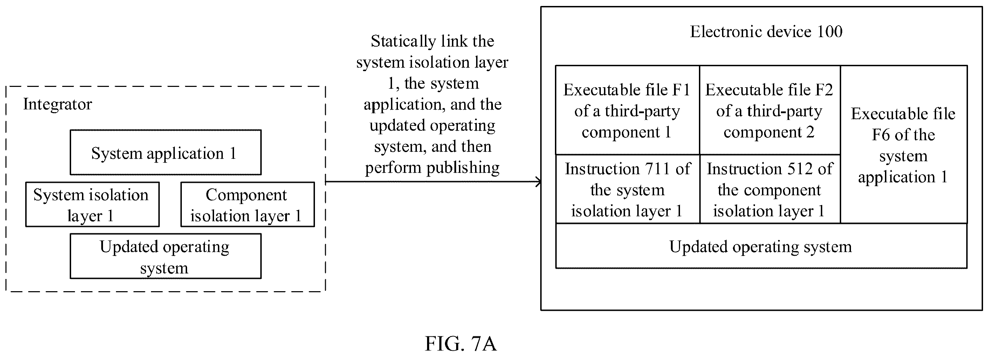

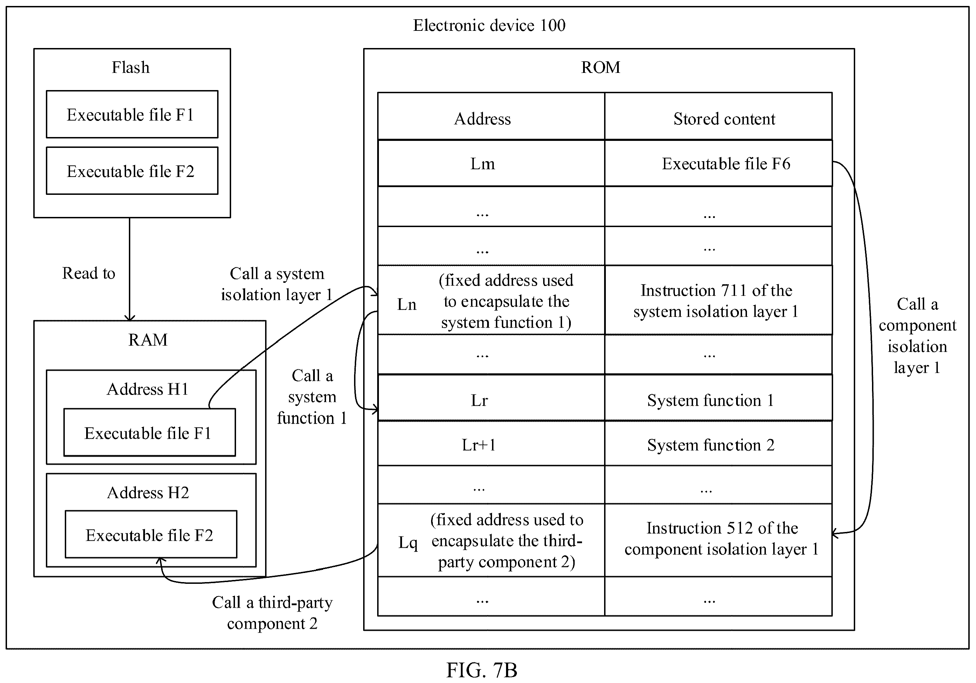

**Case 3 (****FIG. 7A** **and** **FIG. 7B****): An operating system is updated after an electronic device 100 is delivered.**

For an integrator, refer to the descriptions in the case 1 and the case 2. It should be noted that a binary difference isolation layer (including a system isolation layer 1 and a component isolation layer 1) owned by the integrator may be a binary difference isolation layer provided by a component provider before an electronic device 100 is delivered, as shown in FIG. 5A. Alternatively, a binary difference isolation layer owned by the integrator may be a binary difference isolation layer updated by a component provider after an electronic device 100 is delivered. After being updated, the binary difference isolation layer may include more system isolation layers used to encapsulate different system functions, and more component isolation layers used to encapsulate different third-party components. In this way, more third-party components can use system isolation layers to call system functions needed by the third-party components, and more system applications can use component isolation layers to call third-party components needed by the system applications.

As shown in FIG. 7A, the integrator may update an operating system, statically link the system isolation layer 1, a system application like a system application 1, and an updated operating system together, and then publish content obtained through the static linking to the electronic device 100. The electronic device 100 may update the system isolation layer 1, the system application 1, and a storage area of the operating system, and store an executable file F6 of the system application 1, an instruction 711 of the system isolation layer 1, and an updated operating system.

A source program of the system application 1 may remain unchanged. Compared with a compilation and linking process used before the operating system is updated, a sequence of compiling and/or linking the source program of the system application 1 after the operating system is updated may change. Therefore, content of an executable file generated by statically linking the system application 1 together with the updated operating system may change, and a storage location of the executable file may also change. For distinguishing, the executable file F6 herein represents the executable file generated by statically linking the system application 1 together with the updated operating system.

After the operating system is updated, a storage address of a system function on the electronic device 100 may change. The system isolation layer indexes and calls the system function by obtaining an actual storage address of the system function during static linking. Therefore, an instruction obtained by statically linking the system isolation layer 1 needs to be updated along with the update of the operating system. The system isolation layer 1 is statically linked together with the updated operating system, so that an actual storage address, obtained through the update of the operating system, of a system function 1 on the electronic device 100 can be obtained. For distinguishing, the instruction 711 herein represents an instruction generated by statically linking the system isolation layer 1 together with the updated operating system. The instruction 711 of the system isolation layer 1 may be used to find the system function 1 based on the actual storage address, obtained through the update of the operating system, of the system function 1, and call the system function 1. The instruction 511 of the system isolation layer 1 shown in FIG. 5A may be used to find the system function 1 based on an actual storage address, used before the operating system is updated, of the system function 1, and call the system function 1.

It can be understood that, when the system isolation layer 1 is statically linked together with the updated operating system, the source program of the system isolation layer 1 may remain unchanged, and an instruction of the system isolation layer 1 may change after the static linking. That is, when the operating system is updated, the component provider may not need to provide a binary difference isolation layer again.

In addition, although the instruction obtained by statically linking the system isolation layer 1 is updated along with the update of the operating system, an address at which the instruction of the system isolation layer 1 is stored does not change. That is, a fixed address used to encapsulate the system function 1 does not change with the system update. Therefore, a third-party component 1 may still find the instruction 711 of the system isolation layer 1 based on the fixed address used to encapsulate the system function 1, and call the system function 1 by using the system isolation layer 1 after the operating system is updated. The third-party component 1 may not need to be recompiled or relinked. A third-party component 2 may not need to be recompiled or relinked either. The component isolation layer 1 is used to encapsulate the third-party component 2. Because the third-party component 2 is not updated, the component isolation layer 1 may not need to be recompiled or relinked.

It can be learned that an instruction of the system isolation layer 1 may vary before and after the operating system is updated. For example, the instruction 511 shown in FIG. 5A changes to the instruction 711 shown in FIG. 7A. However, the instruction of the system isolation layer 1 is always stored in a same storage area before and after the operating system is updated. Being stored in a same storage area may indicate being stored in a storage area corresponding to a same address (to be specific, the fixed address used to encapsulate the system function 1). In this application, that a storage area of information remains unchanged may indicate that a storage address of the information in a memory (for example, a ROM or a RAM) remains unchanged.

**FIG. 7B** **is an example diagram of storage locations of a third-party component, a binary difference isolation layer, a system application, and an operating system on an electronic device 100.**

As shown in FIG. 7B, a memory of the electronic device 100 may include a ROM, a RAM, and a flash. The electronic device 100 may update a system application 1, a system isolation layer 1, and an operating system in the ROM. For example, the electronic device 100 may store an executable file F6 of the system application 1 in a storage area with an address of Lm in the ROM, store a system function 1 in a storage area with an address of Lr in the ROM, store a system function 2 in a storage area with an address of Lr+1 in the ROM, and still store an instruction 711 of the system isolation layer 1 in a storage area with an address of Ln in the ROM.

It can be learned through comparison between FIG. 5B and FIG. 7B that, after the operating system of the electronic device 100 is updated, an executable file of the system application 1 may change from an executable file F3 to the executable file F6, and a storage address may change from an address L1 to Lm. After the operating system is updated, a storage address of the system function 1 may change from an address Lk to Lr. Before and after the operating system is updated, a fixed address used to encapsulate the system function 1 may remain unchanged (for example, is still the address Ln), and a fixed address used to encapsulate a third-party component 2 may also remain unchanged (for example, is still an address Lq). Because an instruction of the system isolation layer 1 changes after the operating system is updated, the electronic device 100 may update content in the storage area corresponding to the address Ln, to update the instruction 511 of the system isolation layer 1 shown in FIG. 5B to the instruction 711 of the system isolation layer 1. Because an instruction of a component isolation layer 1 remains unchanged after the operating system is updated, the electronic device 100 may keep content in a storage area corresponding to the address Lq unchanged, to be specific, the content is still an instruction 512 of the component isolation layer 1.

For content stored in the flash and the RAM, refer to the descriptions of FIG. 5B.

During running, the system application 1 may call the component isolation layer 1 by using the instruction 711 of the component isolation layer 1 at the address Lq, and then call the third-party component 2 by using the component isolation layer 1. It can be learned from the foregoing embodiments that, when statically linking the system application 1, an integrator may statically link a target file of the system application 1 into the executable file F6 based on the fixed address (that is, the address Lq) used to encapsulate the third-party component 2. That is, the executable file F6 includes the address Lq. When the system application 1 is run, the electronic device 100 may fetch an on-chip instruction from the ROM, to obtain and execute the executable file F6. The electronic device 100 may read the instruction 512 of the component isolation layer 1 from the ROM based on the address Lq in the executable file F6, to call the component isolation layer 1. Because the component isolation layer 1 may obtain an actual storage address (that is, an address H2) of the third-party component 2 during static linking, the electronic device 100 may call the third-party component 2 by executing the instruction 512 of the component isolation layer 1.

During running, a third-party component 1 may call the system isolation layer 1 by using the instruction 711 of the system isolation layer 1 at the address Ln, and then call the system function 1 by using the system isolation layer 1. It can be learned from the foregoing embodiments that an executable file F1 of the third-party component 1 may include the address Ln. When the third-party component 1 is run, the electronic device 100 may execute the executable file F1, read the instruction 711 of the system isolation layer 1 based on the address Ln in the executable file F1, and call the system isolation layer. Because the system isolation layer 1 may obtain an actual storage address (that is, the address Lr) of the system function 1 during static linking, the electronic device 100 may call the system function 1 by executing the instruction 711 of the system isolation layer 1.

It can be understood that the storage address division and the stored content in the ROM shown in FIG. 7B are merely examples for description of this application, and should not constitute a limitation on this application.

In some embodiments, if a system application like the system application 1 and the operating system are separately stored in two independent storage areas in the ROM, when the operating system is updated, the system application may not need to be recompiled or relinked correspondingly. To be specific, the electronic device 100 may not need to re-burn a storage area in which the system application like the system application 1 is located. If the system application needs to call a system function obtained after the operating system is updated, the system application may call the system function by using a system isolation layer. For details, refer to the method for calling the system function 1 by the third-party component 1 by using the system isolation layer 1.

It can be learned that, when the operating system is updated, an updated operating system may be statically linked together with the system isolation layer and then published to the electronic device 100. The system isolation layer may sense a change in the operating system, and encapsulate, based on the change in the operating system, the system function obtained after the operating system is updated. In this way, a third-party component and/or the system application may still find the system isolation layer based on a fixed address, to call the system function obtained after the operating system is updated. An upper-layer component may not sense the change in the operating system. When the operating system is updated, the component may not need to be recompiled or relinked. In this way, the operating system can be updated independently of the component, to reduce system update costs.

The following describes a method for implementing a binary difference isolation layer according to an embodiment of this application.

In a possible implementation, the binary difference isolation layer may encapsulate a utility function by using an "_attribute_" function in the C language. The "_attribute_" function may be used to fix an interface address for calling the utility function after the utility function is encapsulated. Regardless of whether a storage address of the utility function encapsulated by the binary difference isolation layer changes, the binary difference isolation layer may be stored at a fixed address.

Herein, a system function (a read function) for reading data is used as an example to describe an implementation of a system isolation layer.

The read function may include: int read(int fd, char* buf, size_t len). During running, a component may input a corresponding parameter to the read function, to call the read function to read specified data. For example, a parameter that may be input by the component to the read function may include a storage address of to-be-read data. In this way, the component can call the read function to read data at the storage address.

Content of a system isolation layer used to encapsulate the read function may include: int_attribute_((section(".adaptor"), address(0x10000))) adaptor_read(int fd, char* buf, size_t len).

"0x10000" may be a fixed address used to encapsulate the read function. To be specific, after statically linking the system isolation layer, an electronic device 100 may store an instruction of the system isolation layer in a storage area corresponding to the fixed address. In some embodiments, the fixed address may be located in a ROM of the electronic device 100. The fixed address is merely an example for description of this application, and should not constitute a limitation on this application.

During static linking of the system isolation layer and an operating system, the system isolation layer may obtain an actual storage address of the read function on the electronic device 100.

A manner of calling the read function by the component based on the fixed address used to encapsulate the read function may include: int (0x10000)(int fd, char* buf, size_t len). To be specific, when developing the component, a developer of the component may write the fixed address into a source program of the component, and the fixed address indicates that the component needs to use a system function encapsulated by using the fixed address. Because the fixed address is written into the source program of the component, after compilation and linking, an executable file of the component may include the fixed address used to encapsulate the read function, so that the component can find the system isolation layer through indexing based on the fixed address, and call the read function by using the system isolation layer.

It can be learned that the system isolation layer is a segment of computer program, and is used to encapsulate a system function at a specified fixed address. The system isolation layer may be stored on the electronic device 100 after being compiled and linked, so that the component can call the system isolation layer based on the fixed address during running. The component may call a target system function by calling the system isolation layer.

The "__attribute__" function in the C language is merely an implementation for encapsulating a system function, and should not constitute a limitation on this application. The binary difference isolation layer may alternatively be implemented by using another method for encapsulating a utility function.

For an implementation of a component isolation layer, refer to the foregoing implementation of the system isolation layer. Details are not described herein again. The component isolation layer may be compiled and linked together with a third-party component encapsulated by the component isolation layer, to obtain an actual storage address, on the electronic device 100, of the third-party component encapsulated by the component isolation layer.

Because an actual storage address of a utility function encapsulated by the binary difference isolation layer may be located in a ROM or a RAM, an actual storage address of the utility function that is obtained by the binary difference isolation layer during static linking may include an address in the ROM or an address in the RAM.

A name of the binary difference isolation layer is not limited in this embodiment of this application. For example, the binary difference isolation layer may also be referred to as an isolation module, an isolation function, or an isolation interface. All of other programs that can encapsulate an actual storage address of a target system function at a specified fixed address fall within the protection scope of this solution.

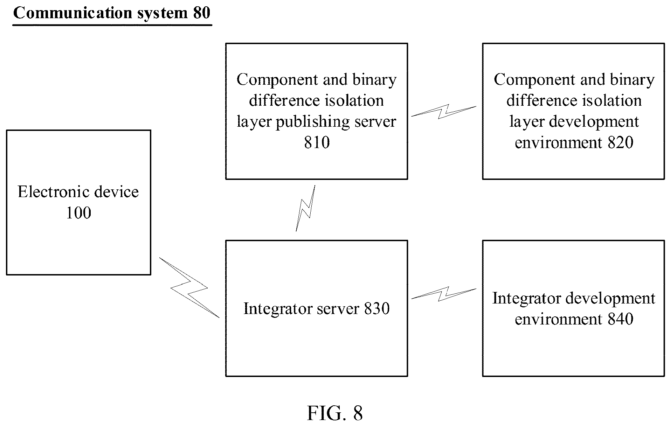

**FIG. 8** **is a diagram of an example architecture of a communication system 80 according to this application.**

As shown in FIG. 8, the communication system 80 may include an electronic device 100, a component and binary difference isolation layer publishing server 810, a component and binary difference isolation layer development environment 820, an integrator server 830, and an integrator development environment 840.

The electronic device 100 may be an electronic device that uses an MCU as a computing core. For a structure of the electronic device 100, refer to the descriptions in the foregoing embodiments.

The component and binary difference isolation layer publishing server 810 and the component and binary difference isolation layer development environment 820 may be devices of the foregoing component provider. The component and binary difference isolation layer development environment 820 may include one or more devices used by a developer of the component provider to develop a third-party component and a binary difference isolation layer. In some embodiments, the component and binary difference isolation layer development environment 820 or the component and binary difference isolation layer publishing server 810 may compile a source file of the third-party component and the binary difference isolation layer, to obtain a target file of the third-party component and a target file of the binary difference isolation layer.

The component and binary difference isolation layer development environment 820 may upload the third-party component and the binary difference isolation layer that are obtained through development to the component and binary difference isolation layer publishing server 810. For example, the component and binary difference isolation layer development environment 820 may upload the source file and/or the target file of the third-party component to the component and binary difference isolation layer publishing server 810, and upload the source file of the binary difference isolation layer to the component and binary difference isolation layer publishing server 810.

The component and binary difference isolation layer publishing server 810 may send the target file of the third-party component and the target file of the binary difference isolation layer to the integrator server 830.

The integrator server 830 and the integrator development environment 840 may be devices of the foregoing integrator. The integrator may also be referred to as a device provider or the like. The integrator development environment 840 may include one or more devices used by a developer of the integrator to develop an operating system and implement a design of the electronic device 100. The integrator development environment 840 may upload the operating system obtained through development to the integrator server 830. In some embodiments, the developer of the integrator may further develop a system application. The integrator development environment 840 may upload the system application obtained through development to the integrator server 830.

When receiving the operating system, the integrator server 830 may compile the operating system. Alternatively, the integrator development environment 840 may compile the operating system, and upload a compiled operating system to the integrator server 830.

The integrator server 830 may statically link the compiled operating system, a compiled component (for example, a third-party component or a system application), and a compiled binary difference isolation layer, and publish content obtained through the static linking to the electronic device 100. For a specific process, refer to the descriptions in the foregoing embodiments.

In some embodiments, the component and binary difference isolation layer development environment 820 may upload an updated third-party component to the component and binary difference isolation layer publishing server 810. The component and binary difference isolation layer publishing server 810 may send a target file of the updated third-party component to the integrator server 830. Then the integrator server 830 may statically link the updated third-party component, and publish content obtained through the static linking to the electronic device 100. In some embodiments, the integrator server 830 may statically link the updated third-party component and a component isolation layer used to encapsulate the updated third-party component, and then publish content obtained through the static linking to the electronic device 100.

In some embodiments, the integrator development environment 840 may upload an updated operating system to the integrator server 830. The integrator server 830 may statically link a system isolation layer together with the updated operating system, and publish content obtained through the static linking to the electronic device 100.

It can be learned from the communication system 80 that, in a scenario in which a component and an operating system are fully statically linked on an MCU device, in the static linking method provided in this application, a dependency of the component on an actual storage address of a system function may be isolated by using a system isolation layer, and a dependency of a system application on an actual storage address of a third-party component may be isolated by using a component isolation layer. In the foregoing method, the component can be decoupled from the operating system, and both the component and the operating system may be independently updated. This can effectively reduce costs of updating the component and costs of updating the operating system.

It can be understood that the user interfaces described in embodiments of this application are merely example interfaces, and constitute no limitation on the solutions of this application. In other embodiments, the user interfaces may use different interface layouts or may include more or fewer controls, or other function options may be added or omitted. Provided that the user interfaces are based on a same inventive idea provided in this application, all of the user interfaces fall within the protection scope of this application.

It should be noted that, if no contradiction or conflict occurs, any features or any parts of any feature in any embodiment of this application may be combined, and a combined technical solution also falls within the scope of embodiments of this application.

In conclusion, the foregoing embodiments are merely intended to describe the technical solutions of this application, but not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions in embodiments of this application.

## Claims

1. A static linking method, wherein the method is applied to an electronic device, the electronic device comprises a first operating system, a first call instruction is stored in a first storage area corresponding to a first address on the electronic device, the first call instruction is used to call a first system function provided by the first operating system, and the method comprises:
updating, by the electronic device, the first operating system, wherein the first operating system is updated through static linking;
updating, by the electronic device, the first call instruction in the first storage area to a second call instruction, wherein the second call instruction is used to call the first system function provided by the updated first operating system; and
running, by the electronic device, a first component in the updated first operating system, obtaining the second call instruction from the first storage area based on the first address, and executing the second call instruction to enable the first component to call the first system function.

2. The method according to claim 1, wherein the method further comprises:
when running the first component in the first operating system that has not been updated, obtaining, by the electronic device, the first call instruction from the first storage area based on the first address, and executing the first call instruction to enable the first component to call the first system function.

3. The method according to claim 1 or 2, wherein the first call instruction comprises a storage address of the first system function on the electronic device before the first operating system is updated, and the second call instruction comprises a storage address, obtained through the update of the first operating system, of the first system function on the electronic device.

4. The method according to any one of claims 1 to 3, wherein the first component stored on the electronic device remains unchanged before and after the first operating system is updated.

5. The method according to any one of claims 1 to 3, wherein the method further comprises:
updating, by the electronic device, the first component, wherein the updated first component still needs to call the first system function, and the first component is updated through static linking; and
running, by the electronic device, the updated first component in the first operating system that has not been updated, obtaining the first call instruction from the first storage area based on the first address, and executing the first call instruction to enable the updated first component to call the first system function.

6. The method according to claim 5, wherein a third call instruction is stored in a second storage area corresponding to a second address on the electronic device, the third call instruction is used to call a second system function provided by the first operating system that has not been updated, the updated first component further needs to call the second system function, and the method further comprises:
running, by the electronic device, the updated first component in the first operating system that has not been updated, obtaining the third call instruction from the second storage area based on the second address, and executing the first call instruction to enable the updated first component to call the second system function.

7. The method according to any one of claims 1 to 6, wherein the electronic device further comprises a second component and a third component, the second component is a third-party component, the third component is a system application, the third component needs to call the second component, a fourth call instruction is stored in a third storage area corresponding to a third address on the electronic device, the fourth call instruction is used to call the second component, and the method further comprises:
updating, by the electronic device, the second component, wherein the second component is updated through static linking;
updating, by the electronic device, the fourth call instruction in the third storage area to a fifth call instruction, wherein the fifth call instruction is used to call the updated second component; and
running, by the electronic device, the third component after updating the second component, obtaining the fifth call instruction from the third storage area based on the third address, and executing the fifth call instruction to enable the third component to call the second component.

8. The method according to claim 7, wherein the method further comprises:
running, by the electronic device, the third component before updating the second component, obtaining the fourth call instruction from the third storage area based on the third address, and executing the fourth call instruction to enable the third component to call the second component.

9. The method according to claim 7 or 8, wherein the fourth call instruction comprises a storage address, on the electronic device, of the second component that has not been updated, and the fifth call instruction comprises a storage address of the updated second component on the electronic device.

10. The method according to any one of claims 7 to 9, wherein both the third component and the first operating system that are stored on the electronic device remain unchanged before and after the second component is updated.

11. The method according to any one of claims 1 to 10, wherein update content of the first operating system comprises one or more of the following: a storage address of the first system function changes, and content of the first system function changes.

12. The method according to any one of claims 1 to 11, wherein the first storage area is a storage area in a ROM in the electronic device.

13. The method according to any one of claims 1 to 12, wherein the first component is a third-party component.

14. An electronic device, wherein the electronic device comprises a memory and a processor, the memory is configured to store a computer program, and the processor is configured to call the computer program, to enable the electronic device to perform the method according to any one of claims 1 to 13.

15. An electronic device, wherein the electronic device is a first electronic device, and the first electronic device comprises a component providing module and a call interface providing module, wherein
the component providing module is configured to provide a first component, wherein the first component needs to call a first system function provided by a first operating system, and the first component is statically linked and then published to a second electronic device comprising the first operating system; and
the call interface providing module is configured to provide a first interface, wherein the first interface is configured to encapsulate the first system function in a first storage area corresponding to a first address on the second electronic device, the first interface is statically linked and then published to the second electronic device, and a program for implementing the first component comprises the first address.

16. The electronic device according to claim 15, wherein the first interface obtains, in a static linking stage, a storage address of the first system function on the second electronic device, and generates, after the static linking, a call instruction used to call the first system function.

17. The electronic device according to claim 15 or 16, wherein
the component providing module is further configured to provide a second component, wherein the second component is called by a third component on the second electronic device, and the second component is statically linked and then published to the second electronic device; and
the call interface providing module is further configured to provide a second interface, wherein the second interface is configured to encapsulate the second component in a third storage area corresponding to a third address on the second electronic device, and the second interface is statically linked and then published to the second electronic device.

18. The electronic device according to claim 17, wherein the second interface obtains, in a static linking stage, a storage address of the second component on the second electronic device, and generates, after the static linking, a call instruction used to call the second component.

19. The electronic device according to claim 17 or 18, wherein
the component providing module is further configured to provide the updated second component, wherein the updated second component is statically linked and then published to the second electronic device, and the second interface obtains, in a static linking stage, a storage address of the updated second component on the second electronic device, and generates, after the static linking, a call instruction used to call the updated second component.

20. A computer-readable storage medium, comprising instructions, wherein when the instructions are run on an electronic device, the electronic device is enabled to perform the method according to any one of claims 1 to 13.

21. A computer program product, wherein the computer program product comprises computer instructions, and when the computer instructions are run on an electronic device, the electronic device is enabled to perform the method according to any one of claims 1 to 13.
